# EUROPEAN PATENT APPLICATION

(11) **EP 4 027 744 A1**
(43) Date of publication of application: **13.07.2022**
(21) Application number: 20871861.9
(22) Date of filing: 11.09.2020
(51) Int. Cl.: H04W 76/10, H04W 88/16, H04W 88/08

(54) **COMMUNICATION METHOD, COMMUNICATION APPARATUS, AND STORAGE MEDIUM**

(30) Priority: 30.09.2019 CN 201910944777
(71) Applicant: Huawei Technologies Co., Ltd., Longgang District Shenzhen, Guangdong 518129 (CN)
(72) Inventor: ZHANG, Di, Shenzhen, Guangdong 518129 (CN); YU, Youyang, Shenzhen, Guangdong 518129 (CN)
(74) Representative: Epping - Hermann - Fischer
(86) International application number: PCT/CN2020/114664
(87) International publication number: WO 2021/063164

(57) **Abstract**

Embodiments of this application provide a communication method, a communication apparatus, and a storage medium The method includes: A first network element receives identity information of an operator requested by a terminal, and determines, based on the identity information of the operator requested by the terminal, a session between the first network element and a second network element, where the session is used by the terminal to communicate, by using the first network element, with a core network that is deployed by the operator requested by the terminal. The first network element receives the identity information of the operator requested by the terminal, and determines, based on the identity information of the operator requested by the terminal, the session between the first network element and the second network element, where the second network element is an access network element that is associated with the operator requested by the terminal, and the second network element may access the core network that is deployed by the operator requested by the terminal. The first network element may provide, by using the session, a communication service for the terminal and the core network that is deployed by the operator requested by the terminal, so that the terminal may access, by using the first network element and the session, the core network that is deployed by the operator requested by the terminal.

## Description

This application claims priority to Chinese Patent Application No. 201910944777.6, filed with the China National Intellectual Property Administration on September 30, 2019 and entitled "COMMUNICATION METHOD, COMMUNICATION APPARATUS, AND STORAGE MEDIUM", which is incorporated herein by reference in its entirety.

### TECHNICAL FIELD

This application relates to the field of communication technologies, and in particular, to a communication method, a communication apparatus, and a storage medium

### BACKGROUND

As mobile communication technologies develop, the 3rd generation partnership project (3rd Generation Partnership Project, 3GPP) standards group formulates a next generation (Next Generation, NG) mobile communication network architecture, namely, a 5G network architecture. The 5G network architecture supports not only access to a 5G core network (5G Core network, 5GC) by using a radio access network (Radio Access Network, RAN) defined by the 3 GPP standards group but also access to the 5G core network by using a fixed network or a wired network. For example, the 5G core network supports access by a 5G residential gateway (5G Residential Gateway, 5G-RG), customer premise equipment (Customer Premise Equipment, CPE), a residential gateway (Residential Gateway, RG), and the like by using the wired network. In other words, a terminal may access the 5GC by using the RAN, or may access the 5GC by using the 5G-RG.

In a conventional technology, a method for enabling the terminal to access, by using the 5G-RG, the 5GC that is deployed by an operator requested by the terminal is urgently needed.

### SUMMARY

This application provides a communication method, a communication apparatus, and a storage medium, so that a terminal may access, by using a first network element and a session, a core network that is deployed by an operator requested by the terminal.

According to a first aspect, this application provides a communication method. The method includes: A first network element receives identity information of an operator requested by a terminal, and determines a session between the first network element and an access network element that is associated with the operator requested by the terminal. The access network element that is associated with the operator requested by the terminal is represented as a second network element. The second network element may access a core network that is deployed by the operator requested by the terminal. Therefore, the terminal may access, by using the first network element and the session between the first network element and the second network element, the core network that is deployed by the operator requested by the terminal.

In a possible design, the first network element may store a correspondence between a session and a PLMN list. When receiving the identity information of the operator requested by the terminal, the first network element determines, from the correspondence between a session and a PLMN list based on the identity information of the operator requested by the terminal, a session corresponding to the operator requested by the terminal, where the session is the session between the first network element and the second network element. According to the solution provided in this embodiment, all terminals that request to access the operator may access, by using the session, a 5GC that is deployed by the operator requested by the terminal, so that efficiency of communication between the terminal and the 5GC that is deployed by the operator requested by the terminal is improved.

In a possible design, a 5G-RG does not store a correspondence between a session and identity information of an operator, or the session corresponding to the operator requested by the terminal does not exist in a correspondence shown in Table 1. In this case, the 5G-RG may establish a session between the 5G-RG and a TNGF based on the identity information of the operator requested by the terminal, where the TNGF is the access network element that is associated with the operator requested by the terminal.

In a possible design, the first network element determines identity information of the second network element based on the identity information of the operator requested by the terminal and identity information of an access network element that is separately associated with at least one operator supported by the first network element. The first network element establishes the session between the first network element and the second network element based on the identity information of the second network.

In a possible design, before the first network element determines the identity information of the second network element based on the identity information of the operator requested by the terminal and the identity information of the access network element that is separately associated with the at least one operator supported by the first network element, the method further includes: The first network element obtains the identity information of the access network element that is separately associated with the at least one operator supported by the first network element.

In a possible design, the identity information of the access network element that is separately associated with the at least one operator supported by the first network element is stored in the first network element.

In a possible design, that the first network element obtains the identity information of the access network element that is separately associated with the at least one operator supported by the first network element includes: The first network element obtains a URSP rule of the first network element by using a third network element. The first network element obtains, from the URSP rule, the identity information of the access network element that is separately associated with the at least one operator supported by the first network element.

In a possible design, that the first network element obtains the identity information of the access network element that is separately associated with the at least one operator supported by the first network element includes: The first network element receives, from a fourth network element, the identity information of the access network element that is separately associated with the at least one operator supported by the first network element, where the identity information of the access network element that is separately associated with the at least one operator is obtained by the fourth network element from access subscription information of the first network element.

In a possible design, the identity information of the access network element includes a data network name of the access network element.

In a possible design, the identity information of the second network element includes the identity information of the operator requested by the terminal.

In a possible design, that the first network element establishes the session between the first network element and the second network element based on the identity information of the second network includes: The first network element obtains, from a fifth network element based on the identity information of the second network element, an IP address required by the first network element to establish the session. The first network element establishes the session between the first network element and the second network element based on the IP address.

In a possible design, that the first network element obtains, from a fifth network element based on the identity information of the second network element, an IP address required by the first network element to establish the session includes: The first network element sends a session establishment request to the fifth network element, where the session establishment request includes the identity information of the second network element and a session type. The first network element receives a session establishment response from the fifth network element, where the session establishment response includes the IP address required by the first network element to establish the session. According to the solution provided in this embodiment, the first network element may obtain, from the fifth network element, the IP address required by the first network element to establish the session.

In a possible design, the method further includes: The first network element obtains identity information of the at least one operator supported by the first network element. The first network element broadcasts the identity information of the at least one operator supported by the first network element.

In a possible design, the identity information of the at least one operator supported by the first network element includes the identity information of the operator requested by the terminal. According to the solution provided in this embodiment, the first network element may broadcast the identity information of the at least one operator supported by the first network element, and the terminal may determine, based on the identity information of the at least one operator supported by the first network element, whether the first network element supports the operator requested by the terminal. When the first network element supports the operator requested by the terminal, the terminal establishes a connection to the first network element, so that signaling overheads caused by the terminal randomly establishing the connection to the first network element are avoided.

In a possible design, that the first network element obtains identity information of the at least one operator supported by the first network element includes: The first network element receives, from the fourth network element, the identity information of the at least one operator supported by the first network element, where the identity information of the at least one operator supported by the first network element is obtained by the fourth network element from the access subscription information of the first network element. According to the solution provided in this embodiment, a method in which the first network element obtains, from the fourth network element, the identity information of the at least one operator supported by the first network element is implemented.

In a possible design, that the first network element obtains identity information of the at least one operator supported by the first network element includes: The first network element receives, from the fourth network element, the identity information of the access network element that is separately associated with the at least one operator supported by the first network element. The first network element determines, based on the identity information of the access network element that is separately associated with the at least one operator, the identity information of the at least one operator supported by the first network element. According to the solution provided in this embodiment, flexibility in obtaining, by the 5G-RG, a trusted PLMN list is improved.

In a possible design, when the first network element obtains the identity information of the at least one operator supported by the first network element, the first network element may further send indication information to the fourth network element. The fourth network element obtains, from the access subscription information of the first network element based on the indication information, the identity information of the access network element that is separately associated with the at least one operator supported by the first network element, and sends, to the first network element, the identity information of the access network element that is separately associated with the at least one operator supported by the first network element. The first network element receives, from the fourth network element, the identity information of the access network element that is separately associated with the at least one operator supported by the first network element. Further, the first network element determines, based on the identity information of the access network element that is separately associated with the at least one operator, the identity information of the at least one operator supported by the first network element.

In a possible design, that the first network element obtains identity information of the at least one operator supported by the first network element includes: The first network element sends the indication information to the fourth network element. The first network element receives, from the fourth network element, the identity information of the at least one operator supported by the first network element, where the identity information of the at least one operator supported by the first network element is obtained, from the identity information of the access network element that is separately associated with the at least one operator supported by the first network element, by the fourth network element based on the indication information after the fourth network element obtains, from the access subscription information of the first network element based on the indication information, the identity information of the access network element that is separately associated with the at least one operator supported by the first network element. According to the solution provided in this embodiment, the flexibility in obtaining, by the 5G-RG, the trusted PLMN list is further improved.

In a possible design, that the first network element establishes the session between the first network element and the second network element based on the identity information of the operator requested by the terminal includes: The first network element sends the session establishment request to the fifth network element, where the session establishment request includes a wildcard data network name, indication information, and the identity information of the operator requested by the terminal. The first network element receives the session establishment response from the fifth network element, where the session establishment response includes the IP address required by the first network element to establish the session. The first network element establishes the session between the first network element and the second network element based on the IP address. According to the solution provided in this embodiment, the first network element may dynamically obtain the trusted PLMN list.

In a possible design, the session establishment response further includes identity information of a plurality of operators corresponding to the second network element.

In a possible design, the identity information of the plurality of operators corresponding to the second network element is obtained by the fifth network element from the session subscription information of the first network element based on the indication information.

In a possible design, before the first network element receives the identity information of the operator requested by the terminal, the method further includes: The first network element broadcasts wildcard public land mobile network PLMN information.

In a possible design, after the first network element establishes, based on the identity information of the operator requested by the terminal, the session between the first network element and the second network element, the method further includes: The first network element establishes a correspondence between a session and identity information of at least one operator, where the at least one operator is associated with the second network element.

In a possible design, if the session between the first network element and the second network element corresponds to a plurality of operators, the session is used to provide a communication service for a terminal that requests to access the plurality of operators.

In a possible design, if the session between the first network element and the second network element corresponds to one operator, the session is used to provide a communication service for a terminal that requests to access the operator.

According to a second aspect, this application provides a communication method. The method includes: A terminal receives identity information of at least one operator supported by a first network element. The terminal sends, to the first network element, identity information of an operator requested by the terminal, where the identity information of the operator requested by the terminal is used to determine a session between the first network element and a second network element, the second network element is an access network element that is associated with the operator requested by the terminal, and the session is used by the terminal to communicate, by using the first network element, with a core network that is deployed by the operator requested by the terminal.

In a possible design, the identity information of the at least one operator supported by the first network element includes the identity information of the operator requested by the terminal.

In a possible design, if the session between the first network element and the second network element corresponds to a plurality of operators, the session is used to provide a communication service for a terminal that requests to access the plurality of operators.

In a possible design, if the session between the first network element and the second network element corresponds to one operator, the session is used to provide a communication service for a terminal that requests to access the operator.

According to a third aspect, this application provides a communication method. The method includes: A fourth network element obtains access subscription information of a first network element. The fourth network element obtains, from the access subscription information of the first network element, identity information of an access network element that is separately associated with at least one operator supported by the first network element. The fourth network element sends, to the first network element, the identity information of the access network element that is separately associated with the at least one operator supported by the first network element.

In a possible design, that the fourth network element obtains, from the access subscription information of the first network element, identity information of an access network element that is separately associated with at least one operator supported by the first network element includes: The fourth network element obtains, from the access subscription information of the first network element based on indication information of the first network element, the identity information of the access network element that is separately associated with the at least one operator supported by the first network element.

In a possible design, the identity information of the access network element that is separately associated with the at least one operator supported by the first network element is used to determine identity information of the at least one operator supported by the first network element.

According to a fourth aspect, this application provides a communication method. The method includes: A fourth network element obtains access subscription information of a first network element. The fourth network element obtains, from the access subscription information of the first network element, identity information of an access network element that is separately associated with at least one operator supported by the first network element. The fourth network element determines, based on the identity information of the access network element that is separately associated with the at least one operator supported by the first network element, identity information of the at least one operator supported by the first network element. The fourth network element sends, to the first network element, the identity information of the at least one operator supported by the first network element.

In a possible design, that the fourth network element obtains, from the access subscription information of the first network element, identity information of an access network element that is separately associated with at least one operator supported by the first network element includes: The fourth network element obtains, from the access subscription information of the first network element based on indication information of the first network element, the identity information of the access network element that is separately associated with the at least one operator supported by the first network element.

In a possible design, that the fourth network element determines, based on the identity information of the access network element that is separately associated with the at least one operator supported by the first network element, identity information of the at least one operator supported by the first network element includes: The fourth network element determines, based on the indication information of the first network element, the identity information of the at least one operator supported by the first network element from the identity information of the access network element that is separately associated with the at least one operator supported by the first network element.

According to a fifth aspect, this application provides a communication apparatus, including a module, a component, or a circuit configured to implement the method according to the first aspect, the second aspect, the third aspect, or the fourth aspect.

According to a sixth aspect, this application provides a communication apparatus, including:
a processor and a transceiver, where the processor and the transceiver communicate with each other through an internal connection.

The processor is configured to perform processing steps in the method according to the first aspect, the second aspect, the third aspect, or the fourth aspect, and the transceiver is configured to perform receiving and sending steps in the method according to the first aspect, the second aspect, the third aspect, or the fourth aspect.

In a possible design, the communication apparatus in the sixth aspect may be a 5G-RG, a terminal, an AMF, or an SMF, or may be a component (for example, a chip or a circuit) of the 5G-RG, the terminal, the AMF, or the SMF.

In another possible design, the communication apparatus in the sixth aspect may further include a memory, where the memory is configured to store a computer program, and the processor is configured to execute the computer program stored in the memory, so that the communication apparatus performs the method according to the first aspect, the second aspect, the third aspect, or the fourth aspect.

According to a seventh aspect, this application provides a communication apparatus, including an input interface circuit, a logic circuit, and an output interface circuit, where the logic circuit is configured to perform the method according to the first aspect, the second aspect, the third aspect, or the fourth aspect.

According to an eighth aspect, this application provides a computer-readable storage medium The computer-readable storage medium stores a computer program, and the computer program includes instructions used to perform the method according to the first aspect, the second aspect, the third aspect, or the fourth aspect.

According to a ninth aspect, this application provides a computer program, where the computer program includes instructions used to perform the method according to the first aspect, the second aspect, the third aspect, or the fourth aspect.

In a possible design, the program in the ninth aspect may be fully or partially stored on a storage medium that is encapsulated with a processor, or may be fully or partially stored on a memory that is not encapsulated with a processor.

According to a tenth aspect, an embodiment of this application further provides a system, including the communication apparatus according to the fifth aspect, the sixth aspect, or the seventh aspect.

According to an eleventh aspect, an embodiment of this application further provides a processor. The processor includes at least one circuit, configured to perform the method according to the first aspect, the second aspect, the third aspect, or the fourth aspect.

According to a twelfth aspect, an embodiment of this application further provides a communication apparatus. The communication apparatus includes a memory and a processor, where the memory is configured to store a computer program, and the processor is configured to execute the computer program stored in the memory, so that the communication apparatus performs the method according to the first aspect, the second aspect, the third aspect, or the fourth aspect.

It can be learned that in the foregoing aspects, the first network element receives the identity information of the operator requested by the terminal, and determines, based on the identity information of the operator requested by the terminal, the session between the first network element and the second network element, where the second network element is the access network element that is associated with the operator requested by the terminal, and the second network element may access the core network that is deployed by the operator requested by the terminal. Therefore, the first network element may provide, by using the session, the communication service for the terminal and the core network that is deployed by the operator requested by the terminal, so that the terminal may access, by using the first network element and the session, the core network that is deployed by the operator requested by the terminal.

### BRIEF DESCRIPTION OF DRAWINGS

FIG. 1 is a schematic diagram of an application scenario according to an embodiment of this application;
FIG. 2 is a schematic diagram of a structure of a 5 GC in a conventional technology;
FIG. 3 is a schematic diagram of a network architecture in which a terminal accesses a 5GC by using a TNAP and a TNGF in a conventional technology;
FIG. 4 is a schematic diagram of a network architecture in which a terminal accesses a 5GC by using a TWAP and a TWIF in a conventional technology;
FIG. 5 is a schematic diagram of a network architecture according to an embodiment of this application;
FIG. 6 is a flowchart of a communication method according to an embodiment of this application;
FIG. 7A and FIG. 7B are a signaling diagram of a communication method according to an embodiment of this application;
FIG. 8A and FIG. 8B are a signaling diagram of another communication method according to an embodiment of this application;
FIG. 9A and FIG. 9B are a signaling diagram of another communication method according to an embodiment of this application;
FIG. 10A and FIG. 10B are a signaling diagram of another communication method according to an embodiment of this application;
FIG. 11 is a schematic diagram of a structure of a communication apparatus according to an embodiment of this application;
FIG. 12 is a schematic diagram of a structure of a communication apparatus according to an embodiment of this application;
FIG. 13 is a schematic diagram of a structure of another communication apparatus according to an embodiment of this application;
FIG. 14 is a schematic diagram of a structure of another communication apparatus according to an embodiment of this application;
FIG. 15 is a schematic diagram of a structure of another communication apparatus according to an embodiment of this application;
FIG. 16 is a schematic diagram of a structure of still another communication apparatus according to an embodiment of this application;
FIG. 17 is a schematic diagram of a structure of still another communication apparatus according to an embodiment of this application; and
FIG. 18 is a schematic diagram of a structure of still another communication apparatus according to an embodiment of this application.

### DESCRIPTION OF EMBODIMENTS

Terms used in embodiments of this application are merely used to explain specific embodiments of this application, but are not intended to limit this application.

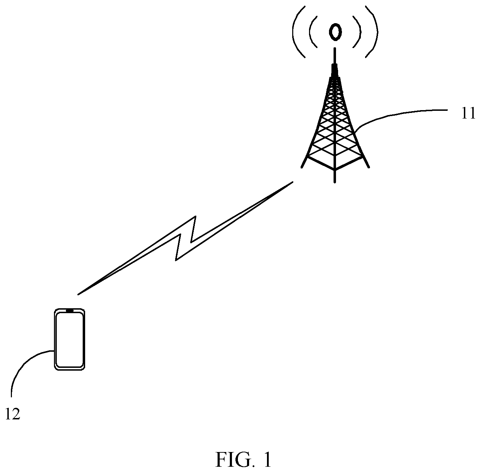

Embodiments of this application may be applied to various communication systems. FIG. 1 is a schematic diagram of an application scenario according to an embodiment of this application. A communication system shown in FIG. 1 mainly includes a network device 11 and a terminal 12.
(1) The network device 11 may be a network side device, for example, an access point (Access Point, AP) of a wireless local area network (Wireless Local Area Network, WLAN), an evolved NodeB (Evolved NodeB, eNB or eNodeB) of 4G, or a base station for next generation communication, for example, a 5 G new radio access technology (New Radio Access Technology, NR) base station (next generation NodeB, gNB), a small cell, or a micro cell, or may also be a relay station, a transmission reception point (Transmission and Reception Point, TRP), a road side unit (Road Side Unit, RSU), or the like. In this embodiment, communication systems of different communication standards have different base stations. For distinction, a base station in a 4G communication system is referred to as a long term evolution (Long Term Evolution, LTE) eNB, a base station in a 5G communication system is referred to as an NR gNB, and a base station that supports both the 4G communication system and the 5 G communication systemis referred to as an evolved long term evolution (Evolutional Long Term Evolution, eLTE) eNB. These names are only for ease of differentiation, but are not limited in meaning.
(2) The terminal 12 is also referred to as user equipment (User Equipment, UE), and is a device that provides voice and/or data connectivity for a user, for example, a handheld device with a wireless connection function, a vehicle-mounted device, or a vehicle with a vehicle-to-vehicle (vehicle-to-vehicle, V2V) communication capability. Common terminals include, for example, a mobile phone, a tablet computer, a notebook computer, a palmtop computer, a mobile internet device (mobile internet device, MID), and a wearable device, for example, a smartwatch, a smart band, or a pedometer.
(3) The term "a plurality of" indicates two or more, and another quantifier is similar to the term "a plurality of".
The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

It should be noted that, a quantity and a type of terminals 12 included in the communication system shown in FIG. 1 are merely an example, and this embodiment of this application is not limited thereto. For example, more terminals 12 that communicate with the network device 11 may be further included. For brevity, details are not described in the accompanying drawings. In addition, in the communication system shown in FIG. 1, although the network device 11 and the terminal 12 are shown, the communication system may include but is not limited to the network device 11 and the terminal 12, for example, may further include a core network node or a device used to carry a network virtualization function. This is clear to a person of ordinary skill in the art. Details are not described herein.

In addition, embodiments of this application may not only be applied to a communication system such as a 4G wireless communication system, a vehicle-to-everything (vehicle-to-everything, V2X) communication system, a device-to-device (Device-to-Device, D2D) communication system, or subsequent evolved LTE, but also be applied to a next-generation wireless communication system, namely, a 5G communication system, and another system that may appear in the future, for example, a next-generation Wi-Fi network or a 5G internet of vehicles.

It should be noted that, with continuous evolution of the communication system, names of the foregoing network elements may change in the another system that may appear in the future. In this case, the solutions provided in embodiments of this application are also applicable.

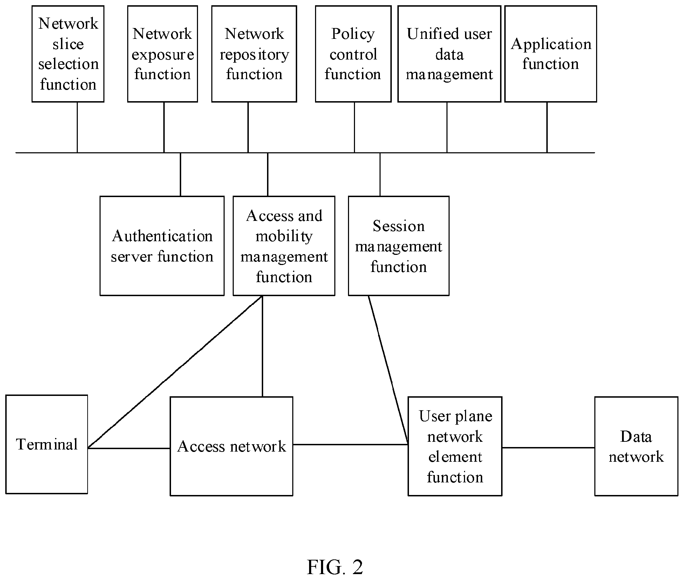

A 5G network architecture is used as an example in embodiments of this application. As shown in FIG. 2, a terminal may access a 5GC by using an access network (Access Network, AN). The AN may be specifically a RAN. The 5GC includes a user plane function (User Plane Function, UPF) network element and a control plane function (Control Plane Function, CPF) network element. The UPF is mainly responsible for forwarding a data packet, controlling quality of service (Quality of Service, QoS), collecting statistics about charging information, and so on. The CPF is mainly responsible for user registration and authentication, mobility management, delivery of a data packet forwarding policy and a QoS control policy to the UPF, and the like. The CPF may specifically include a network slice selection function (Network Slice Selection Function, NSSF), a network exposure function (Network Exposure Function, NEF), a network repository function (Network Repository Function, NRF), a policy control function (Policy Control Function, PCF), a unified data management (Unified Data Management, UDM) function, an application function (Application Function, AF), an authentication server function (Authentication Server Function, AUSF), an access and mobility management function (Access and Mobility Management Function, AMF), and a session management function (Session Management Function, SMF).

The AMF is responsible for a registration procedure during access by the terminal and location management during movement of the terminal. The SMF is responsible for establishing a corresponding session connection to a network side when the terminal initiates a service, and providing a specific service for a user, especially delivering the data packet forwarding policy, a QoS policy, and the like to the UPF based on an N4 interface between the SMF and the UPF. The AUSF is mainly responsible for authenticating the terminal and determining validity of the terminal. The UDM is mainly configured to store subscription data of the terminal. The PCF is mainly configured to deliver a service-related policy to the AMF or the SMF. The AF is configured to send an application-related requirement to the PCF, so that the PCF generates a corresponding policy.

Specifically, an interface between the terminal and the AMF is an N1 interface, an interface between the AN and the AMF is an N2 interface, an interface between the AN and the UPF is an N3 interface, an interface between the UPF and the SMF is the N4 interface, and an interface between the UPF and a DN is an N6 interface. The NSSF communicates with another network element in the CPF through an Nnssf interface, the NEF communicates with the another network element in the CPF through an Nnef interface, the NRF communicates with the another network element in the CPF through an Nnrf interface, the PCF communicates with the another network element in the CPF through an Npcf interface, the UDM communicates with the another network element in the CPF through an Nudm interface, the AF communicates with the another network element in the CPF through an Naf interface, the AUSF communicates with the another network element in the CPF through an Nausf interface, the AMF communicates with the another network element in the CPF through an Namf interface, and the SMF communicates with the another network element in the CPF through an Nsmf interface.

In addition, a data network (Data Network, DN) shown in FIG. 2 is configured to provide a service for the terminal, for example, provide a mobile operator service, an internet (Internet) service, or a third-party service.

In addition, the 5G network architecture not only supports access to the 5GC by the RAN that is defined by the 3GPP standards group, but also supports a non-3 GPP (non-3GPP) access technology in which the 5GC is accessed by using a non-3GPP interaction function, for example, a non-3GPP interworking function (Non-3GPP Interworking Function, N3IWF), a trusted non-3GPP gateway function (Trusted Non-3GPP Gateway Function, TNGF), a trusted WLAN interworking function (Trusted WLAN Interworking Function, TWIF), or a next generation access gateway (Next Generation Packet Data Gateway, NG-PDG).

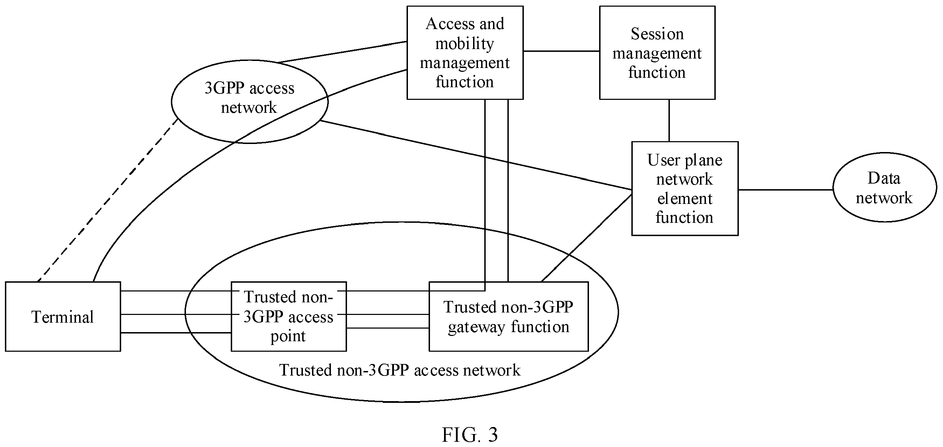

As shown in FIG. 3, in addition to a 3GPP access network, a trusted non-3GPP access point (Trusted Non-3GPP Access Point, TNAP) and a TNGF may be used by a terminal to access a 5GC. An interface between the terminal and an AMF is an N1 interface, an interface between the 3GPP access network and the AMF is an N2 interface, an interface between the 3 GPP access network and a UPF is an N3 interface, an interface between the AMF and the TNGF is the N2 interface, an interface between the AMF and an SMF is an N11 interface, an interface between the SMF and the UPF is an N4 interface, an interface between the UPF and the DN is an N6 interface, an interface between the UPF and the TNGF is the N3 interface, an interface between the terminal and the TNAP is a Yt interface, an interface between the TNAP and the TNGF is a Ta interface, and an interface between the terminal and the TNGF is an NWt interface.

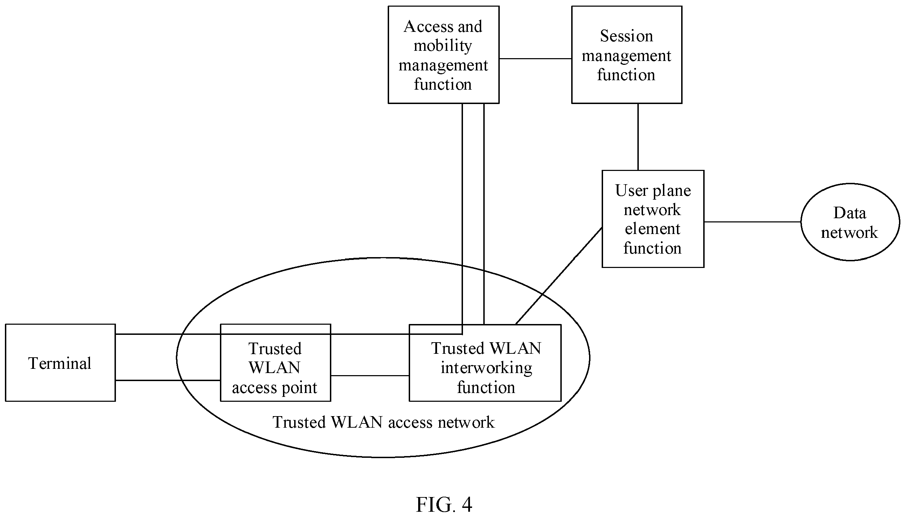

As shown in FIG. 4, a terminal may alternatively access a 5GC by using a trusted WLAN access point (Trusted WLAN Access Point, TWAP) and a TWIF. An interface between the terminal and the TWAP is a Yt interface, and an interface between the TWAP and the TWIF is a Yw interface.

A difference between FIG. 3 and FIG. 4 lies in that when the terminal does not have a capability of forming a non-access stratum (Non-access stratum, NAS) by using a WLAN, the terminal accesses the 5GC by using the TWAP and the TWIF. In this case, the TWIF acts as an agent of the terminal to generate a NAS message required to access the 5GC. It may be understood that the TWIF is a special form of the TNGF. For ease of description, the TWIF is replaced by the TNGF in the following.

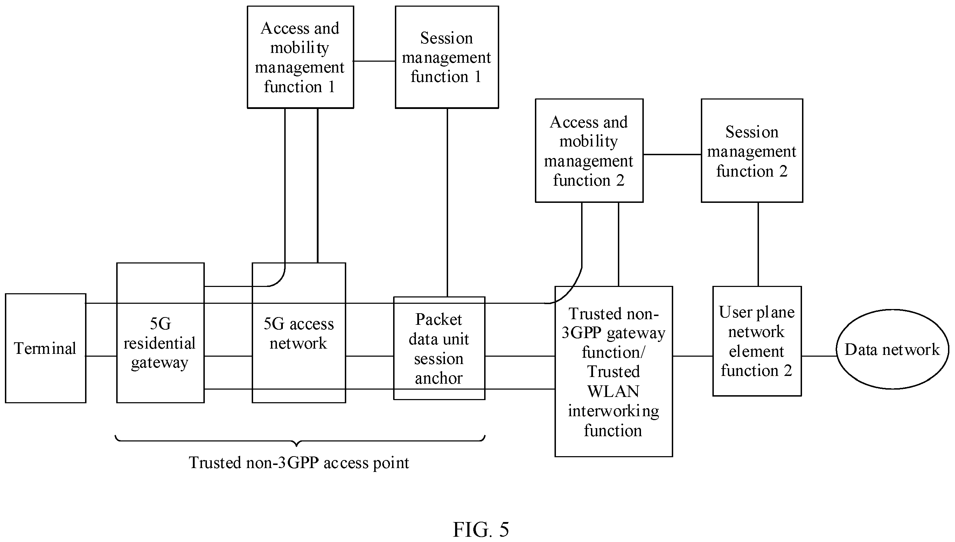

In this embodiment of this application, a TNAP may include a 5G-RG, a 5G access network (5G-ANs), and a packet data unit session anchor (PDU Session Anchor, PSA). As shown in FIG. 5, the 5G-ANs may include a RAN and/or a W-5GAN. FIG. 5 may include a plurality of UPFs, where the plurality of UPFs maybe sequentially connected, and a UPF that is in the plurality of UPFs and that is connected to a TNGF may be used as the PSA. The 5G-RG may establish a packet data unit (Protocol Data Unit, PDU) session between the 5G-RG and the TNGF or between the 5G-RG and the TWIF, to provide, for a terminal, a connection between the terminal and the TNGF or between the terminal and the TWIF. In some scenarios, the TNGF or the TWIF may be used as a DN. The terminal may be specifically a 3GPP terminal (3GPP UE), and the 3GPP terminal may also be referred to as a remote device (remote 3GPP UE). As shown in FIG. 5, a 5GC deployed by a home operator of the 5G-RG includes an AMF 1 and an SMF 1, and a 5GC that is deployed by an operator requested by the terminal includes an AMF 2, an SMF 2, and a UPF 2. An interface between the terminal and the 5G-RG is a Yt interface, an interface between the terminal and the AMF 2 is an N1 interface, an interface between the 5G-RG and the AMF 1 is the N1 interface, an interface between the 5G-AN(s) and the AMF 1 is an N2 interface, an interface between the 5G-AN(s) and the PSAis an N3 interface, an interface between the 5G-RG and the TNGF orbetween the 5G-RG and the TWIF is a Ta or Yw interface, an interface between the PSA and the TNGF or between the PSA and the TWIF is an N6 interface, an interface between the SMF 1 and the PSA is an N4 interface, an interface between the AMF 2 and the TNGF or between the AMF 2 and the TWIF is the N2 interface, an interface between the AMF 2 and the SMF 2 is an N11 interface, an interface between the SMF 2 and the UPF 2 is the N4 interface, an interface between the UPF 2 and the DN is the N6 interface, and an interface between the TNGF and the UPF 2 or between the TWIF and the UPF 2 is the N3 interface. In some scenarios, the home operator of the 5G-RG and the operator requested by the terminal may not be a same operator. Therefore, a method for enabling the terminal to access, by using the 5G-RG and the TNGF, the 5GC that is deployed by the operator requested by the terminal is required. Embodiments of this application provide a communication method, to enable the terminal to access, by using the 5G-RG and the TNGF, the 5GC that is deployed by the operator requested by the terminal. The following describes the communication method in detail with reference to embodiments.

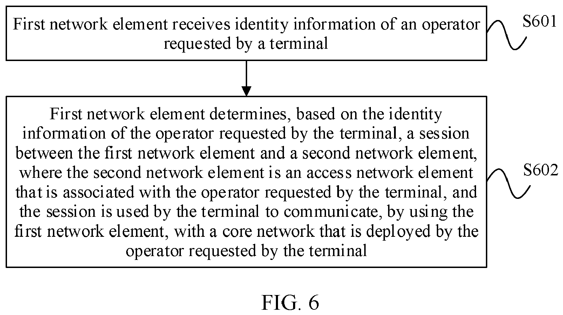

FIG. 6 is a flowchart of a communication method according to an embodiment of this application. As shown in FIG. 6, the communication method in this embodiment includes the following steps.

S601: A first network element receives identity information of an operator requested by a terminal.

In this embodiment, the first network element is a 5G-RG. The operator requested by the terminal is represented as a first operator. The operator requested by the terminal may be specifically a home operator of the terminal, or may be an operator that has a roaming agreement or a cooperative relationship with the home operator of the terminal. A home operator of the 5G-RG is represented as a second operator. The first operator and the second operator may be the same or may be different. An example in which the first operator and the second operator are different is used herein for schematic description.

Identity information of the first operator is r operator, and identity information of the second operator is w operator. Because the 5G-RG is deployed by the second operator, the 5G-RG supports the second operator. In some scenarios, the second operator may have a cooperative relationship with another operator. For example, the second operator may have a cooperative relationship with the first operator and a third operator. Therefore, the 5G-RG may further support the first operator and the third operator. In other words, the 5G-RG may support a plurality of operators. Therefore, the 5G-RG may broadcast identity information of each of the plurality of operators supported by the 5G-RG, so that a terminal within coverage of the 5G-RG may receive broadcast information and determine, based on the broadcast information, the operator supported by the 5G-RG. In some scenarios, a list may include the identity information of each of the plurality of operators supported by the 5G-RG, where the list may be represented as a public land mobile network (Public Land Mobile Network, PLMN) list, and the PLMN list may be understood as a trusted PLMN list supported by the 5G-RG as a trusted non-3GPP access point. In some scenarios, the 5G-RG may support only one operator. In this case, the trusted PLMN list may include identity information of the only one operator.

After determining at least one operator supported by the 5G-RG, the terminal within the coverage of the 5G-RG further determines whether the at least one operator includes the operator requested by the terminal. If the at least one operator includes the operator requested by the terminal, the terminal establishes a connection to the 5G-RG. For example, the terminal establishes a layer 2 (Layer 2, L2) connection to the 5G-RG. Further, the terminal sends, to the 5G-RG, identity information of an operator selected by the terminal from the PLMN list, where the identity information of the operator selected by the terminal is specifically the identity information of the operator requested by the terminal, for example, r operator.

S602: The first network element determines, based on the identity information of the operator requested by the terminal, a session between the first network element and a second network element, where the second network element is an access network element that is associated with the operator requested by the terminal.

The session is used by the terminal to communicate, by using the first network element, with a core network that is deployed by the operator requested by the terminal.

In this embodiment, the terminal accesses, by using the 5 G-RG, the core network that is deployed by the operator requested by the terminal. Therefore, the 5G-RG needs to be capable of communicating with a network element that is associated with the operator requested by the terminal. The network element that is associated with the operator requested by the terminal may be an access network element that can access the core network that is deployed by the operator requested by the terminal. The access network element that is associated with the operator requested by the terminal is represented as the second network element herein. Specifically, the second network element is a TNGF.

In a possible case, the 5G-RG may store a correspondence between a session and a PLMN list, as shown in Table 1 below.

**Table 1**

| Session ID | Identity information of an operator |
|---|---|
| Session 1 | r_operator |
| Session 2 | w_operator |
| Session 3 | t_operator |

For example, the 5G-RG supports the first operator, the second operator, and the third operator. The identity information of the first operator is r operator, the identity information of the second operator is w operator, and identity information of the third operator is t operator. An access network element associated with the first operator is represented as a TNGF 1, an access network element associated with the second operator is represented as a TNGF 2, and an access network element associated with the third operator is represented as a TNGF 3. A session 1 may be a session between the 5G-RG and the TNGF 1, a session 2 may be a session between the 5G-RG and the TNGF 2, and a session 3 may be a session between the 5G-RG and the TNGF 3. The TNGF 1, the TNGF 2, and the TNGF 3 may be a same TNGF, or may be different TNGFs. Alternatively, some of the TNGF 1, the TNGF 2, and the TNGF 3 are the same. For example, two of the TNGF 1, the TNGF 2, and the TNGF 3 are a same TNGF.

For example, when receiving the identity information r operator of the operator requested by the terminal, the 5G-RG determines, based on r_operator and the foregoing correspondence between a session and identity information of an operator, the session 1 corresponding to r operator, and provides, by using the session 1, a communication service for the terminal and the core network that is deployed by the operator requested by the terminal. Specifically, the terminal is connected to the 5G-RG, the 5G-RG is connected, by using the session 1, to the TNGF 1 associated with r operator, and the TNGF 1 may access the core network that is deployed by the operator requested by the terminal. Therefore, the terminal may access, by using the 5G-RG and the session 1, the core network that is deployed by the operator requested by the terminal.

In another possible case, the 5 G-RG does not store the correspondence between a session and identity information of an operator, or a session corresponding to the operator requested by the terminal does not exist in the correspondence shown in Table 1. In this case, the 5G-RG may establish a session between the 5G-RG and the TNGF based on the identity information of the operator requested by the terminal, where the TNGF is the access network element that is associated with the operator requested by the terminal. Further, the 5G-RG provides, by using the established session, a communication service for the terminal and the core network that is deployed by the operator requested by the terminal. In addition, after the 5G-RG establishes the session between the 5G-RG and the TNGF, the 5G-RG may further establish a correspondence between a session and identity information of an operator requested by the terminal. In some scenarios, a same TNGF may be an access network element associated with a plurality of different operators. For example, the TNGF is the access network element associated with the first operator, and is also the access network element associated with the second operator. After the 5G-RG establishes the session between the 5G-RG and the TNGF, the 5G-RG may further establish a correspondence between a session and identity information of a first operator and a correspondence between a session and identity information of a second operator.

The session in this embodiment may be specifically a PDU session. In addition, depending on whether the TNGF is deployed by the operator requested by the terminal, namely, the first operator, or is deployed by the home operator of the 5G-RG, namely, the second operator, there may be the following possible cases.

In a possible case, the TNGF is deployed by the second operator. If the second operator, the first operator, and the third operator have a cooperative relationship, the TNGF may communicate with a network element in a 5GC deployed by the second operator, a network element in a 5GC deployed by the first operator, and a network element in a 5GC deployed by the third operator. Therefore, in this case, the PDU session between the 5G-RG and the TNGF may provide, for a terminal that requests to access the first operator, the second operator, and the third operator, a service for accessing a 5GC deployed by a corresponding operator. In other words, a ratio of a quantity of PDU sessions to a quantity of operators is 1:N, where N is greater than 1. In this case, a correspondence between a session established by a 5G-RG and a PLMN list is specifically a correspondence between a PDU session and a first operator, a second operator, and a third operator.

In another possible case, if the TNGF is deployed by the first operator, the PDU session between the 5G-RG and the TNGF may provide, only for a terminal that requests to access the first operator, a service for accessing the 5GC deployed by the first operator. In other words, the ratio of the quantity of PDU sessions to the quantity of operators is 1:N, where N is equal to 1. In this case, the correspondence between a session established by a 5G-RG and a PLMN list is specifically a correspondence between a PDU session and a first operator.

In this embodiment, the first network element receives the identity information of the operator requested by the terminal, and determines, based on the identity information of the operator requested by the terminal, the session between the first network element and the second network element, where the second network element is the access network element that is associated with the operator requested by the terminal, and the second network element may access the core network that is deployed by the operator requested by the terminal. Therefore, the first network element may provide, by using the session, the communication service for the terminal and the core network that is deployed by the operator requested by the terminal, so that the terminal may access, by using the first network element and the session, the core network that is deployed by the operator requested by the terminal.

With reference to several specific embodiments, the following describes a specific process in which the 5G-RG establishes the PDU session with the TNGF and establishes the correspondence between a session and a PLMN list.

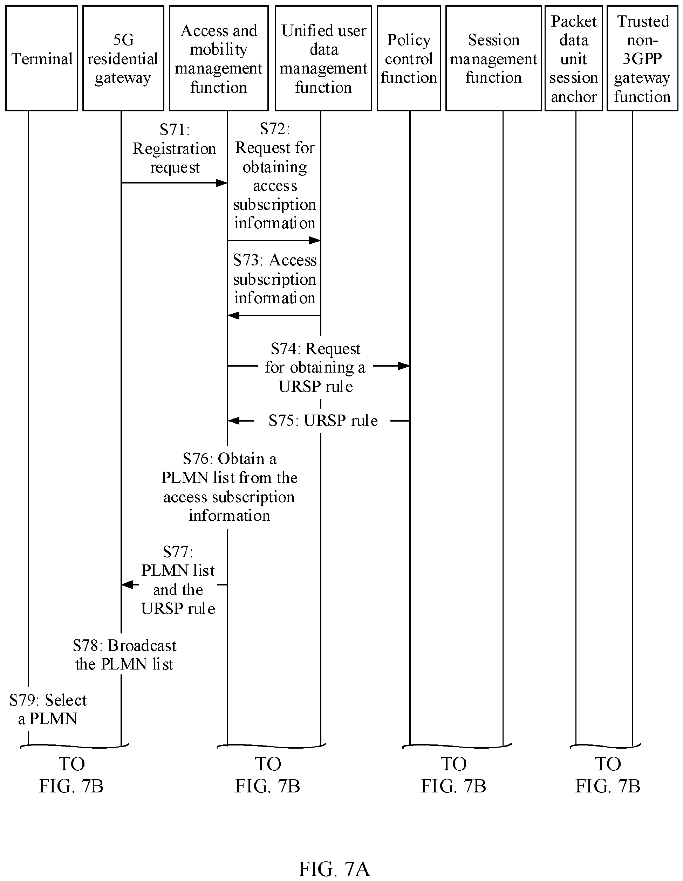

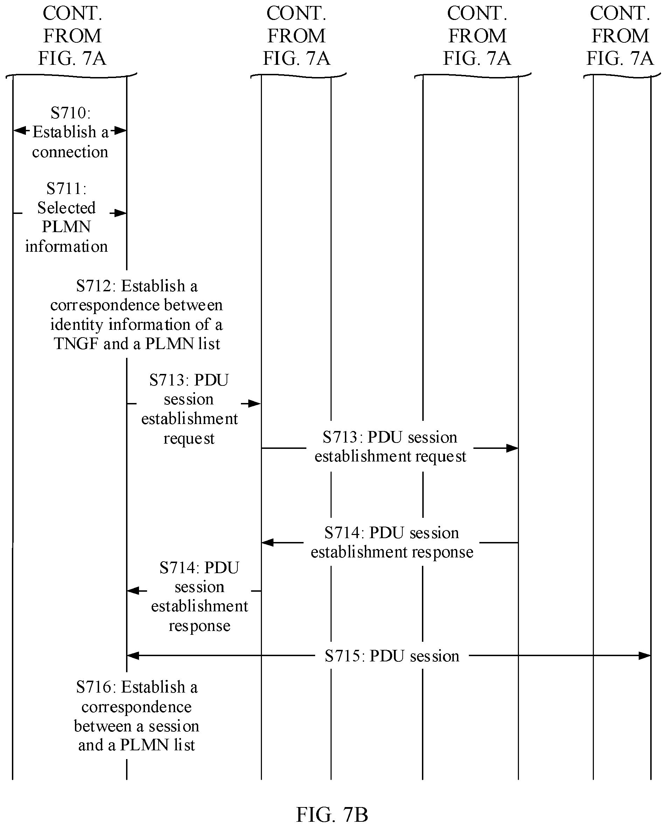

FIG. 7A and FIG. 7B are a signaling diagram of a communication method according to an embodiment of this application. As shown in FIG. 7A and FIG. 7B, network elements used in the communication method in this embodiment include a terminal, a 5G-RG, an AMF, an SMF, a UDM, a PCF, a PSA, and a TNGF. The PCF may be represented as a third network element, the AMF may be represented as a fourth network element, and the SMF may be represented as a fifth network element. The communication method in this embodiment includes the following steps.

S71: The 5G-RG sends a registration request to the AMF.

S72: The AMF sends, to the UDM, a request for obtaining access subscription information of the 5G-RG.

Specifically, the request for obtaining the access subscription information of the 5G-RG includes one or more of identity information, an access type, and location information of the 5G-RG. The UDM obtains the access subscription information of the 5G-RG based on the one or more of the identity information, the access type, and the location information of the 5 G-RG. The access subscription information of the 5G-RG includes a trusted PLMN list supported by the 5G-RG as a trusted non-3 GPP access point. Specifically, the trusted PLMN list may be explicitly stored in the access subscription information of the 5G-RG or may be implicitly stored in the access subscription information of the 5G-RG. In this embodiment, an example in which the trusted PLMN list is explicitly stored in the access subscription information of the 5G-RG is used for description. In addition, the access subscription information of the 5G-RG may be stored in the UDM in advance, or the UDM may obtain the access subscription information of the 5G-RG from a unified data repository (Unified Data Repository, UDR).

S73: The UDM sends the access subscription information of the 5G-RG to the AMF.

S74: The AMF sends, to the PCF, a request for obtaining a UE route selection policy (URSP) rule of the 5G-RG.

Specifically, the URSP rule of the 5G-RG may include identity information of an access network element that is separately associated with at least one operator supported by the 5G-RG. The identity information of the access network element may be specifically a data network name (Data Network Name, DNN) of the access network element. The access network element is specifically the TNGF. Therefore, identity information of the TNGF is specifically a DNN of the TNGF. The DNN of the TNGF may be understood as a data network name of a DN when the TNGF is used as the DN.

For example, the 5G-RG supports a first operator, a second operator, and a third operator. Correspondingly, the URSP rule of the 5G-RG includes a DNN of a TNGF 1 associated with the first operator, a DNN of a TNGF 2 associated with the second operator, and a DNN of a TNGF 3 associated with the third operator.

In this embodiment, a format of the identity information of the access network element that is separately associated with the at least one operator supported by the 5G-RG is not limited in the URSP rule. For example, the DNN of the TNGF 1 associated with the first operator is represented as a DNN A, the DNN of the TNGF 2 associated with the second operator is represented as a DNN B, and the DNN of the TNGF 3 associated with the third operator is represented as a DNN C.

For example, when TNGFs separately associated with the first operator, the second operator, and the third operator are all the TNGF 1, the identity information of the access network element that is separately associated with the at least one operator supported by the 5G-RG may be expressed as:
TNGF DNN A.r_operator.w_operator.t_operator.

Alternatively, when TNGFs separately associated with the first operator, the second operator, and the third operator are all the TNGF 1, the identity information of the access network element that is separately associated with the at least one operator supported by the 5G-RG may be alternatively expressed as:
TNGF DNN A.r_operator, TNGF DNN A.w_operator, and TNGF DNN A.t_operator.

For another example, when a TNGF associated with the first operator is the TNGF 1, and TNGFs associated with both the second operator and the third operator are the TNGF 2, the identity information of the access network element that is separately associated with the at least one operator supported by the 5G-RG may be expressed as:
TNGF DNN A.r_operator and TNGF DNN B.w_operator.t_operator.

For example, TNGF DNN B.w operator.t operator may indicate that the TNGF 2 is associated with a plurality of operators. Therefore, after the 5G-RG establishes a PDU session with the TNGF 2, the PDU session may provide, for a terminal of the second operator and a terminal of the third operator, a service for accessing a 5GC that is deployed by an operator requested by the terminal. TNGF DNN A.r_operator may indicate that the TNGF 1 is associated with one operator. After the 5G-RG establishes a PDU session with the TNGF 1, the PDU session may provide, only for a terminal that requests to access the first operator, a service for accessing a 5GC deployed by the first operator.

S75: The PCF sends the URSP rule to the AMF.

S76: The AMF obtains a PLMN list from the access subscription information.

S77: The AMF sends the PLMN list and the URSP rule to the 5G-RG.

Specifically, the AMF may simultaneously send the PLMN list and the URSP rule to the 5G-RG or sequentially send the PLMN list and the URSP rule to the 5G-RG. For example, by using a NAS message, the AMF may simultaneously send the PLMN list and the URSP rule to the 5G-RG or sequentially send the PLMN list and the URSP rule to the 5G-RG.

It may be understood that in some embodiments, the URSP rule may alternatively be directly and locally configured in the 5G-RG by a home operator of the 5G-RG. In other words, the identity information of the access network element that is separately associated with the at least one operator supported by the 5G-RG may be locally stored in the 5G-RG.

S78: The 5G-RG broadcasts the PLMN list.

Specifically, the 5G-RG may broadcast the PLMN list by using an access network query protocol (Access Network Query Protocol, ANQP).

S79: The terminal selects a PLMN

For example, the terminal is located within coverage of the 5G-RG. After receiving the PLMN list broadcast by the 5G-RG, the terminal detects whether the PLMN list includes identity information of the first operator requested by the terminal. The identity information of the first operator requested by the terminal may be specifically the identity information of the first operator requested by the terminal. If the identity information of the first operator is included, the terminal selects the identity information of the first operator from the PLMN list, that is, selects the PLMN

S710: The terminal establishes a connection to the 5G-RG.

For example, the terminal establishes an L2 connection to the 5G-RG.

S711: The terminal sends, to the 5G-RG, PLMN information selected by the terminal.

After the terminal establishes the connection to the 5 G-RG, the 5G-RG may be used as an access point to request identity information of the terminal by using an extensible authentication protocol (Extensible Authentication Protocol, EAP) process. The identity information returned by the terminal includes the PLMN information selected by the terminal, namely, the identity information of the first operator.

S712: The 5G-RG establishes a correspondence between identity information of a TNGF and a PLMN list.

The 5G-RG establishes the correspondence between identity information of a TNGF and a PLMN list according to the URSP rule that is received in S77. Specifically, the 5G-RG obtains, from the URSP rule, the DNN of the TNGF that is separately associated with the at least one operator supported by the 5G-RG, and further establishes a correspondence between a DNN of a TNGF and a PLMN list. For example, the identity information of the access network element that is separately associated with the at least one operator supported by the 5G-RG is expressed as:
TNGF DNN A.r_operator and TNGF DNN B.w_operator.t operator.

The correspondence established by the 5G-RG between a DNN of a TNGF and a PLMN list is specifically shown in Table 2 below.

**Table 2**

| DNN of the TNGF | Identity information of the operator |
|---|---|
| DNN A | r_operator |
| DNN B | w_operator |
| DNN B | t_operator |

It can be learned from Table 2 that the TNGF associated with the first operator is the TNGF 1, that is, a ratio of a quantity of TNGFs 1 to a quantity of operators is 1:1. After the PDU session is established between the 5G-RG and the TNGF 1, the PDU session may support only the terminal that requests to access the first operator. The TNGFs separately associated with the second operator and the third operator are the TNGF 2, that is, a ratio of a quantity of TNGFs 2 to the quantity of operators is 1:N, where N is greater than 1. After the 5G-RG establishes the PDU session with the TNGF 2, the PDU session may support both a terminal that requests to access the second operator and a terminal that requests to access the third operator.

S713: The 5G-RG sends a PDU session establishment request to the SMF by using the AMF

The 5G-RG finds, from Table 2 based on the identity information of the first operator selected by the terminal, namely, r operator, that a DNN of a TNGF corresponding to r operator is the DNN A. The PDU session establishment request sent by the 5 G-RG to the SMF by using the AMF may include the DNN A, indicating that the 5G-RG requests to establish the PDU session between the 5G-RG and the TNGF 1. In addition, the PDU session establishment request may further include a PDU session type. Specifically, the PDU session establishment request may be included in the NAS message. In the NAS message, the 5G-RG may set DNN=DNN A and set the PDU session type to an IP type.

S714: The SMF sends a PDU session establishment response to the 5G-RG by using the AMF.

After receiving the PDU session establishment request, the SMF obtains an IP address required by the 5G-RG to establish the session and sends the PDU session establishment response to the 5G-RG by using the AMF, where the PDU session establishment response may include the IP address required by the 5G-RG to establish the session. Specifically, the SMF may send the PDU session establishment response to the 5G-RG by using the NAS message.

It may be understood that the 5G-RG may further establish a PDU session identification for each PDU session. Correspondingly, the foregoing PDU session establishment request and the PDU session establishment response may further include the PDU session identification.

S715: The 5G-RG establishes the PDU session with the TNGF.

The 5G-RG establishes the PDU session with the TNGF 1 based on the IP address required by the 5G-RG to establish the session. When the PDU session is established, the IP address required by the 5G-RG to establish the session may be used as a source IP address, and an IP address of the TNGF 1 may be used as a destination IP address. Finally, the 5G-RG establishes the PDU session between the 5G-RG and the TNGF 1 that corresponds to a trusted PLMN requested by the terminal.

S716: The 5G-RG establishes a correspondence between a session and a PLMN list.

It may be understood that one PDU session may correspond to one PDU session identification, or an IP address of the TNGF may be used to identify the PDU session. Therefore, after the 5G-RG establishes the PDU session between the 5G-RG and the TNGF 1, the 5G-RG may establish a correspondence between a PDU session identification (PDU Session ID) corresponding to a PDU session and identity information of a first operator, namely, r_operator. As shown in Table 3 below, a PDU Session 1 represents the PDU session identification of the PDU session between the 5G-RG and the TNGF 1. Alternatively, the 5G-RG establishes a correspondence between an IP address of a TNGF 1 and r operator, as shown in Table 4 below. If the 5G-RG receives again a request from another terminal for accessing the first operator, communication between the another terminal and the 5GC that is deployed by the first operator may be implemented by using the PDU session. If the 5G-RG subsequently receives a request from a terminal for accessing the second operator, because the 5G-RG does not establish a correspondence between a corresponding session and a second operator, S713 to S716 may be repeated to establish the correspondence between a corresponding session and a second operator.

**Table 3**

| | |
|---|---|
| PDU Session 1 | r_operator |

**Table 4**

| | |
|---|---|
| IP address of the TNGF 1 | r_operator |

It may be understood that, if the PLMN information selected by the terminal in S79 is the identity information of the second operator w operator, in S713, the 5G-RG finds, from Table 2 based on w operator, that the DNN of the TNGF corresponding to w operator is the DNN B, and the PDU session establishment request sent to the SMF by using the AMF may include the DNN B. In S714, the PDU session establishment response includes the IP address required by the 5G-RG to establish the session. In S715, the 5G-RG establishes a PDU session with the TNGF 2. Because the TNGFs separately associated with both the second operator and the third operator are the TNGF 2, in S716, the correspondence between a session established by a 5G-RG and a PLMN list may be a correspondence shown in Table 5 or Table 6 below.

**Table 5**

| | |
|---|---|
| PDU Session 2 | w_operator |
| PDU Session 2 | t_operator |

**Table 6**

| | |
|---|---|
| IP address of the TNGF 2 | w_operator |
| IP address of the TNGF 2 | t_operator |

APDU Session 2 in Table 5 represents a PDU session identification of the PDU session between the 5G-RG and the TNGF 2. If the 5G-RG receives again a request from the terminal for accessing the second operator or the third operator, communication between the terminal and the 5GC that is deployed by the operator requested by the terminal may be implemented by using the PDU session.

It may be understood that an execution sequence of some steps in S71 to S716 is not limited. For example, S712 to S716 may be alternatively performed before S79. To be specific, before the 5G-RG receives the PLMN information selected by the terminal, the 5G-RG may establish the correspondence between a session and a PLMN list in advance. The correspondence may be specifically the correspondence shown in Table 3 to Table 6. After receiving the PLMN information selected by the terminal, the 5G-RG determines, from the correspondence between a session and a PLMN list based on the PLMN information selected by the terminal, a session corresponding to the PLMN information, and provides, for the terminal based on the session, a service for accessing the 5GC that is deployed by the operator requested by the terminal.

In addition, S76 may be alternatively performed after S73, and S74 and S75 may be alternatively performed before S72.

In an alternative manner, in S75, the PCF may obtain, from the URSP rule, the identity information of the access network element that is separately associated with the at least one operator supported by the 5G-RG. Further, the PCF sends, to the AMF, the identity information of the access network element that is separately associated with the at least one operator supported by the 5 G-RG. Correspondingly, in S77, the AMF sends, to the 5G-RG, the PLMN list and the identity information of the access network element that is separately associated with the at least one operator supported by the 5G-RG.

In addition, after the PDU session between the 5G-RG and the TNGF is established, the 5G-RG may further send a PDU session modification request to the SMF by using the AMF, where the PDU session modification request may be used to request to modify QoS of the PDU session.

In this embodiment, the 5G-RG establishes, based on the identity information of the operator requested by the terminal, the session between the 5G-RG and the TNGF that is associated with the operator requested by the terminal, so that the terminal may access, by using the 5G-RG and the TNGF, the 5GC that is deployed by the operator requested by the terminal. In addition, the correspondence between a session and an operator requested by a terminal is established by the 5G-RG, so that all terminals that request to access the operator may access, by using the session, the 5GC deployed by the operator, so that efficiency of communication between the terminal and the 5GC that is deployed by the operator requested by the terminal is improved.

In the foregoing embodiment, the trusted PLMN list is explicitly stored in the access subscription information of the 5G-RG. For example, the subscribed trusted PLMN list may be used as an index for searching. The following describes, with reference to a specific embodiment, a case in which the trusted PLMN list is implicitly stored in the access subscription information of the 5G-RG. For example, the trusted PLMN list is implicitly stored in a list of a subscribed data network name in the access subscription information of the 5G-RG. The list of the subscribed data network name is a data network name list, namely, a PLMN list, and includes identity information of the TNGF that is separately associated with the at least one operator supported by the 5 G-RG. Further, the identity information of the TNGF includes trusted PLMN information.

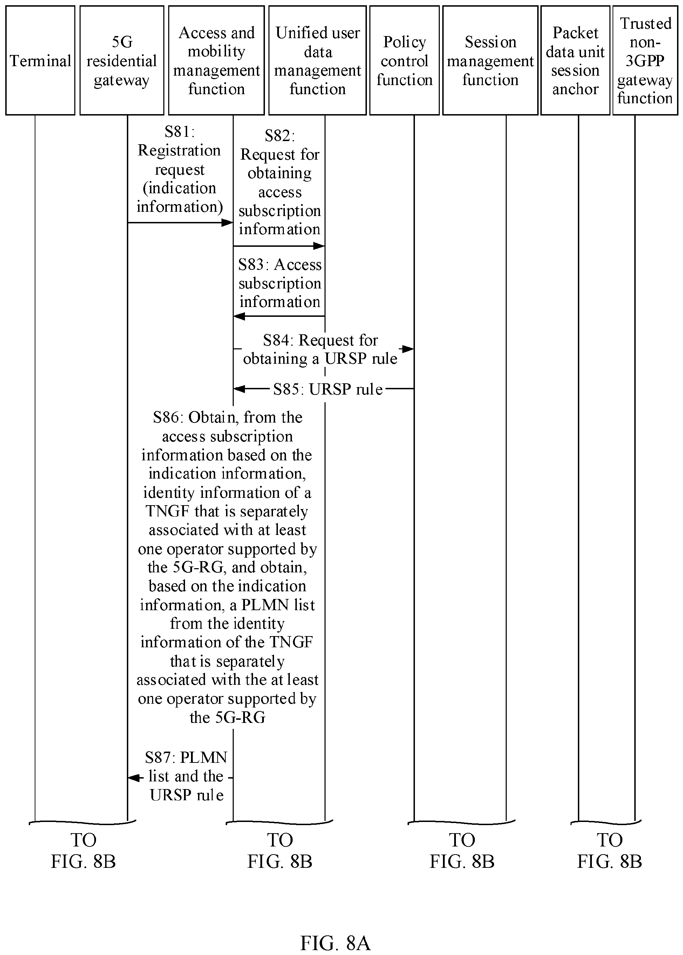

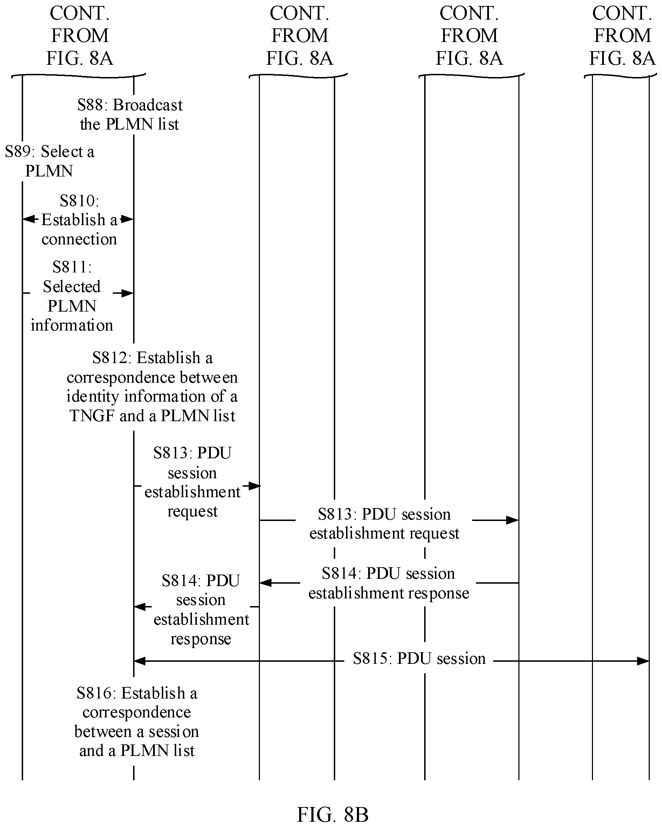

FIG. 8A and FIG. 8B are a signaling diagram of another communication method according to an embodiment of this application. As shown in FIG. 8A and FIG. 8B, the communication method in this embodiment includes the following steps:
S81: A 5G-RG sends a registration request to an AMF, where the registration request includes indication information.
S82: The AMF sends, to a UDM, a request for obtaining access subscription information of the 5G-RG.
S83: The UDM sends the access subscription information of the 5G-RG to the AMF.
S84: The AMF sends, to a PCF, a request for obtaining a URSP rule of the 5G-RG.
S85: The PCF sends the URSP rule to the AMF.
S86: The AMF obtains, from the access subscription information based on the indication information, identity information of a TNGF that is separately associated with at least one operator supported by the 5G-RG, and obtains, based on the indication information, a PLMN list from the identity information of the TNGF that is separately associated with the at least one operator supported by the 5G-RG.
S87: The AMF sends the PLMN list and the URSP rule to the 5G-RG.
S88: The 5G-RG broadcasts the PLMN list.
S89: A terminal selects a PLMN
S810: The terminal establishes a connection to the 5G-RG.
S811: The terminal sends, to the 5G-RG, PLMN information selected by the terminal.
S812: The 5G-RG establishes a correspondence between identity information of a TNGF and a PLMN list.
S813: The 5G-RG sends a PDU session establishment request to an SMF by using the AMF
S814: The SMF sends a PDU session establishment response to the 5G-RG by using the AMF.
S815: The 5G-RG establishes a PDU session with the TNGF.
S816: The 5G-RG establishes a correspondence between a session and a PLMN list.

Differences between S81 to S816 in this embodiment and S71 to S716 described above lie in the following aspects.

In one aspect, in S81, the registration request sent by the 5G-RG to the AMF may include the indication information, where the indication information may be specifically a wireless fidelity communication request (wifi_community_request) indication, and the wifi_community_request indication is used to indicate the AMF to obtain a trusted PLMN list from the access subscription information of the 5 G-RG. In this embodiment, the trusted PLMN list is implicitly stored in the access subscription information of the 5G-RG. Therefore, the 5G-RG needs to send the indication information to the AMF, to indicate the AMF to obtain the trusted PLMN list from the access subscription information of the 5G-RG and send the trusted PLMN list to the 5G-RG.

In another aspect, in S82, when obtaining the access subscription information of the 5G-RG from the UDM, the AMF may also add the wifi_community_request indication to the request used to obtain the access subscription information.

In still another aspect, after the AMF receives the access subscription information of the 5G-RG from the UDM, for example, in S86, the AMF views the access subscription information of the 5G-RG based on the wifi_community_request indication, and obtains, from the access subscription information of the 5G-RG, the identity information of the TNGF that is separately associated with the at least one operator supported by the 5G-RG. Further, the AMF may further determine, based on the indication information, the trusted PLMN list from the identity information of the TNGF that is separately associated with the at least one operator supported by the 5G-RG.

In yet another aspect, in S87, the AMF may further generate a wifi_community_enabled indication, where the wifi_community_enabled indication is used to represent a response of the AMF to the wifi_community_request indication. Further, the AMF sends the wifi_community_enabled indication, the trusted PLMN list, and the URSP rule to the 5G-RG. If the AMF fails to obtain the trusted PLMN list from the access subscription information of the 5G-RG based on the wifi_community_request indication in S86, the AMF may alternatively send a wifi_community_disabled indication to the 5G-RG in S87, where the wifi_community_disabled indication is used to indicate that no trusted PLMN list is found.

In this embodiment, the 5G-RG sends the indication information to the AMF, to indicate the AMF to obtain the trusted PLMN list from the access subscription information of the 5G-RG, so that flexibility in obtaining the trusted PLMN list by the 5G-RG is improved.

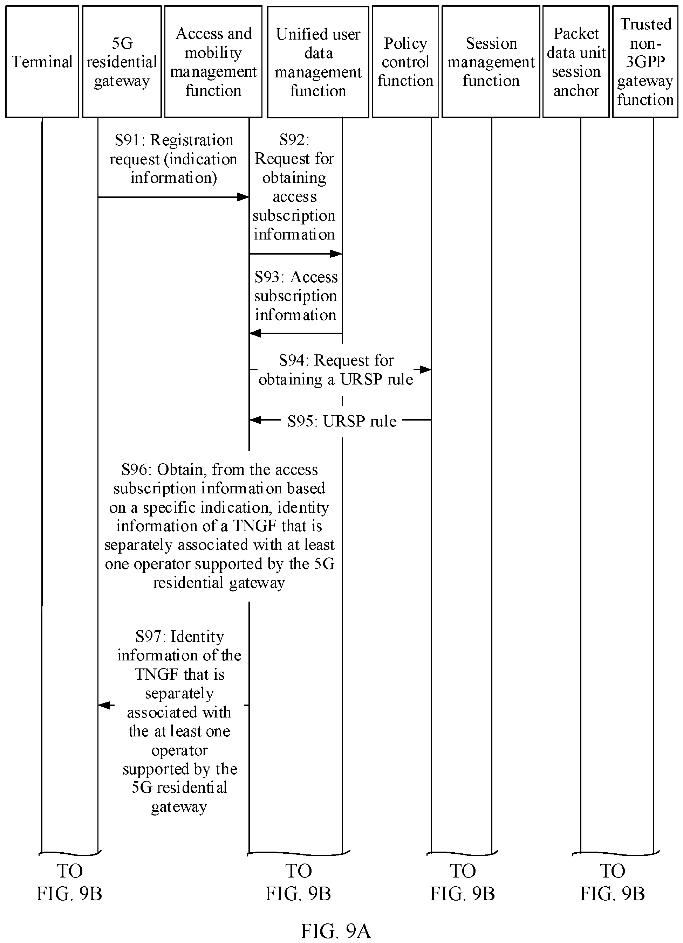

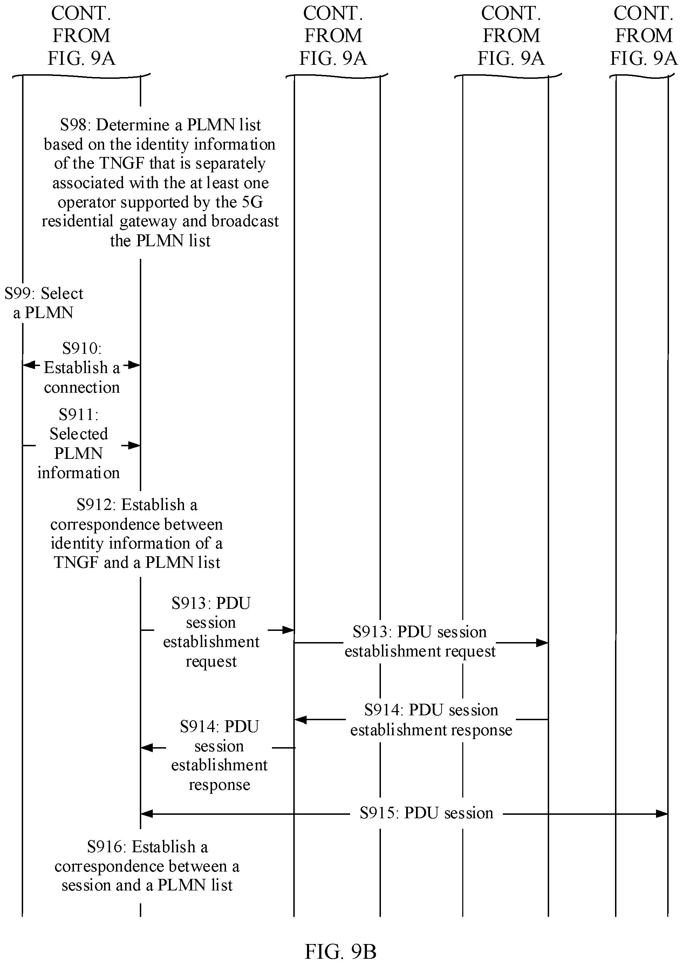

The foregoing embodiments describe a method for obtaining the trusted PLMN list by the 5G-RG when the trusted PLMN list is explicitly or implicitly stored in the access subscription information of the 5G-RG. The following embodiment describes another method for obtaining the trusted PLMN list. In this embodiment, the access subscription information of the 5G-RG may further include the identity information of the TNGF that is separately associated with the at least one operator supported by the 5G-RG. FIG. 9A and FIG. 9B are a signaling diagram of another communication method according to an embodiment of this application. As shown in FIG. 9A and FIG. 9B, the communication method in this embodiment includes the following steps.

S91: A 5G-RG sends a registration request to an AMF, where the registration request includes indication information.

S92: The AMF sends, to a UDM, a request for obtaining access subscription information of the 5G-RG.

S93: The UDM sends the access subscription information of the 5G-RG to the AMF.

S94: The AMF sends, to a PCF, a request for obtaining a URSP rule of the 5G-RG.

S95: The PCF sends the URSP rule to the AMF.

S96: The AMF obtains, from the access subscription information based on the indication information, identity information of a TNGF that is separately associated with at least one operator supported by the 5G-RG.

It may be understood that in some scenarios, the AMF may alternatively obtain, from the access subscription information not based on the indication information of the 5G-RG, the identity information of the TNGF that is separately associated with the at least one operator supported by the 5 G-RG. In other words, after receiving the access subscription information of the 5G-RG from the UDM, the AMF may directly obtain, from the access subscription information of the 5G-RG, the identity information of the TNGF that is separately associated with the at least one operator supported by the 5G-RG.

S97: The AMF sends, to the 5G-RG, the identity information of the TNGF that is separately associated with the at least one operator supported by the 5G-RG.

S98: The 5G-RG determines a PLMN list based on the identity information of the TNGF that is separately associated with the at least one operator supported by the 5G-RG and broadcasts the PLMN list.

S99: A terminal selects a PLMN

S910: The terminal establishes a connection to the 5G-RG.

S911: The terminal sends, to the 5G-RG, PLMN information selected by the terminal.

S912: The 5G-RG establishes a correspondence between identity information of a TNGF and a PLMN list.

S913: The 5G-RG sends a PDU session establishment request to an SMF by using the AMF

S914: The SMF sends aPDU session establishment response to the 5G-RG by using the AMF.

S915: The 5G-RG establishes a PDU session with the TNGF.

S916: The 5G-RG establishes a correspondence between a session and a PLMN list.

Differences between S91 to S916 in this embodiment and S81 to S816 described above lie in the following aspects.

In one aspect, after the AMF receives the access subscription information of the 5G-RG from the UDM, for example, in S96, the AMF views the access subscription information of the 5G-RG based on the indication information of the 5G-RG, for example, a wifi_community_request indication, and obtains, from the access subscription information of the 5G-RG, the identity information of the TNGF that is separately associated with the at least one operator supported by the 5G-RG. The identity information of the TNGF that is separately associated with the at least one operator supported by the 5G-RG is specifically described in the foregoing embodiment, and details are not described herein again.

In another aspect, in S97, the AMF sends, to the 5G-RG, the identity information of the TNGF that is separately associated with the at least one operator supported by the 5G-RG. Specifically, the AMF may send, to the 5G-RG by using a NAS message, the identity information of the TNGF that is separately associated with the at least one operator supported by the 5G-RG.

In still another aspect, in S98, the 5G-RG determines the PLMN list based on the identity information of the TNGF that is separately associated with the at least one operator supported by the 5G-RG, and broadcasts the PLMN list. For example, the identity information of the access network element that is separately associated with the at least one operator supported by the 5G-RG is expressed as:
TNGF DNN A.r_operator and TNGF DNN B.w_operator.t_operator.

It can be learned, based on TNGF DNN A.r_operator and TNGF DNN B.w operator.t operator, that the 5G-RG supports operators whose identity information is r operator, w operator, and t operator. Therefore, the 5G-RG may determine a PLMN list based on TNGF DNN A.r operator and TNGF DNN B.w_operator.t operator, where the PLMN list includes r operator, w operator, and t_operator.

In yet another aspect, in S97, the 5G-RG may receive, from the AMF, the identity information of the TNGF that is separately associated with the at least one operator supported by the 5G-RG. Therefore, in S912, the 5G-RG may directly establish the correspondence between identity information of a TNGF and a PLMN list based on the identity information of the TNGF that is separately associated with the at least one operator supported by the 5G-RG. For a specific process of establishing the correspondence, refer to the method in the foregoing embodiment, and details are not described herein again.

It may be understood that, in S97, the 5G-RG may receive, from the AMF, the identity information of the TNGF that is separately associated with the at least one operator supported by the 5G-RG. Therefore, in this embodiment, the URSP rule in S95 may not include the identity information of the TNGF that is separately associated with the at least one operator supported by the 5G-RG. Alternatively, S94 and S95 may be skipped.

In addition, in FIG. 7A and FIG. 7B or FIG. 8A and FIG. 8B, for a method in which the 5G-RG obtains the identity information of the TNGF that is separately associated with the at least one operator supported by the 5G-RG, refer to the method in which the 5G-RG obtains the identity information of the TNGF that is separately associated with the at least one operator supported by the 5G-RG in FIG. 9Aand FIG. 9B.

In this embodiment, the AMF obtains, from the access subscription information of the 5G-RG based on the indication information of the 5G-RG, the identity information of the TNGF that is separately associated with the at least one operator supported by the 5G-RG, and sends, to the 5G-RG, the identity information of the TNGF that is separately associated with the at least one operator supported by the 5G-RG. The 5G-RG determines the PLMN list based on the identity information of the TNGF that is separately associated with the at least one operator supported by the 5G-RG, to implement another manner of obtaining the PLMN list and further improve flexibility in obtaining the PLMN list by the 5G-RG.

In addition, inFIG. 8Aand FIG. 8B or FIG. 9Aand FIG. 9B, the 5G-RG may alternatively not send the indication information to the AMF. In other words, the AMF may obtain, from the access subscription information not based on the indication information that is sent by the 5G-RG, the identity information of the TNGF that is separately associated with the at least one operator supported by the 5G-RG. Likewise, the AMF may alternatively determine, not based on the indication information that is sent by the 5G-RG, the PLMN list from the identity information of the TNGF that is separately associated with the at least one operator supported by the 5G-RG.

In some scenarios, the AMF may obtain, from the access subscription information based on the indication information, the identity information of the TNGF that is separately associated with the at least one operator supported by the 5G-RG, and the AMF determines, not based on the indication information that is sent by the 5G-RG, the PLMN list from the identity information of the TNGF that is separately associated with the at least one operator supported by the 5G-RG.

In some other scenarios, the AMF obtains, from the access subscription information not based on the indication information that is sent by the 5G-RG, the identity information of the TNGF that is separately associated with the at least one operator supported by the 5 G-RG, and the AMF determines, based on the indication information, the PLMN list from the identity information of the TNGF that is separately associated with the at least one operator supported by the 5G-RG.

In this embodiment, the AMF obtains, from the access subscription information of the 5G-RG based on the indication information of the 5 G-RG, the identity information of the TNGF that is separately associated with the at least one operator supported by the 5G-RG, determines the PLMN list based on the identity information of the TNGF that is separately associated with the at least one operator supported by the 5G-RG, and further sends the PLMN list to the 5G-RG, to implement still another manner of obtaining the PLMN list and further improve the flexibility in obtaining the PLMN list by the 5G-RG.

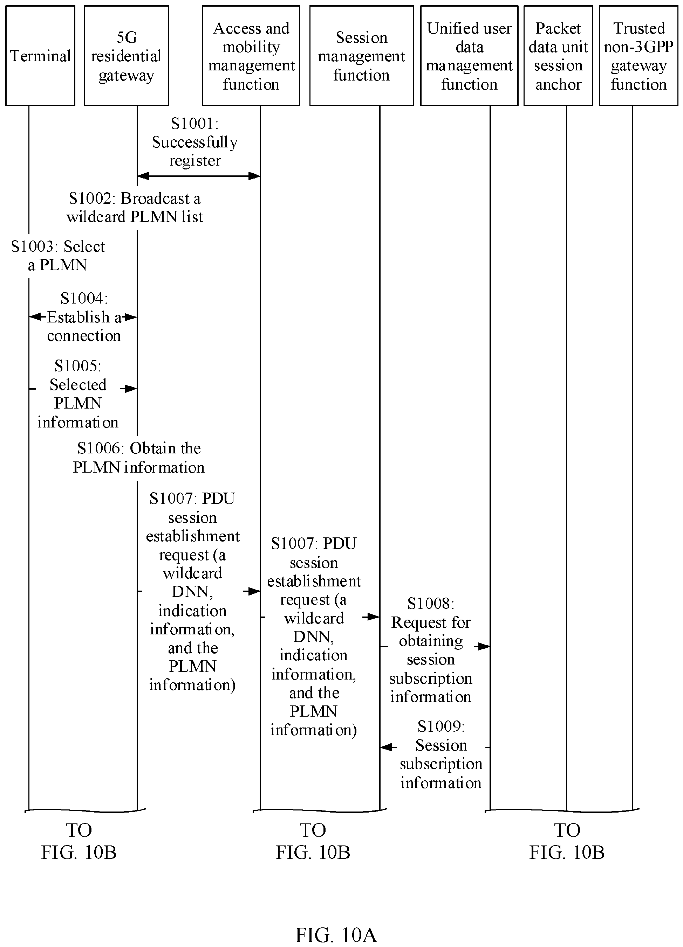

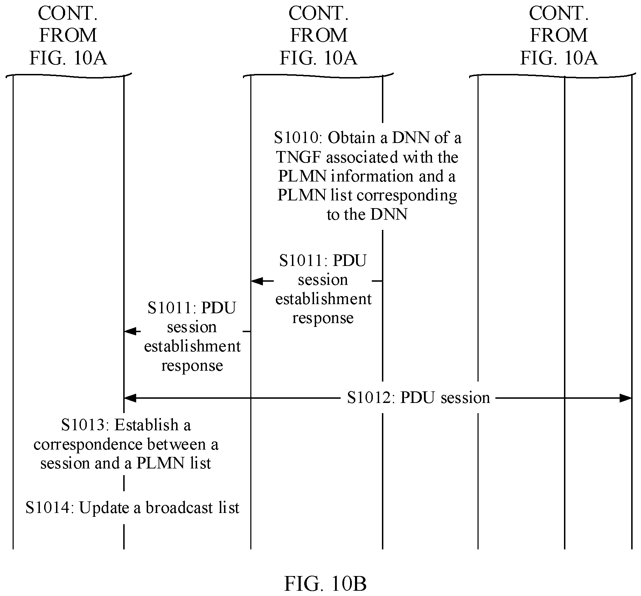

In the foregoing embodiments, FIG. 7A and FIG. 7B, FIG. 8A and FIG. 8B, and FIG. 9A and FIG. 9B describe obtaining the trusted PLMN list from the access subscription information of the 5G-RG by using a registration procedure and/or a configuration update procedure. With reference to a signaling diagram shown in FIG. 10A and FIG. 10B, the following describes a method for obtaining a trusted PLMN list from session subscription information of a 5G-RG by using a session request procedure. The method is a method in which the trusted PLMN list is dynamically obtained. In addition, when the trusted PLMN list includes identity information of only one operator, the trusted PLMN list may alternatively be represented as a trusted PLMN ID, where the trusted PLMN ID is the identity information of the operator. As shown in FIG. 10A and FIG. 10B, a communication method in this embodiment includes the following steps.

S1001: The 5G-RG successfully registers with an AMF.

S1002: The 5G-RG broadcasts a wildcard PLMN list.

In this embodiment, a PLMN list broadcast by the 5G-RG may be the wildcard (wildcard) PLMN list. The wildcard PLMN list indicates that the 5G-RG may provide communication services for all remote devices in a PLMN

S1003: A terminal selects a PLMN

The terminal selects identity information of an operator requested by the terminal.

S1004: The terminal establishes a connection to the 5G-RG.

S1005: The terminal sends, to the 5G-RG, PLMN information selected by the terminal.

The 5G-RG may be used as an access point to request identity information of the terminal by using an EAP procedure. The identity information returned by the terminal includes the PLMN information, where the PLMN information is the identity information of the operator requested by the terminal. In this embodiment, the operator requested by the terminal is a first operator, where the identity information of the operator requested by the terminal is r operator.

S1006: The 5G-RG obtains the PLMN information.

The 5G-RG obtains, from the identity information returned by the terminal, the identity information of the operator requested by the terminal, namely, r operator.

S1007: The 5G-RG sends a PDU session establishment request to an SMF by using the AMF, where the PDU session establishment request includes a wildcard DNN, indication information, and the PLMN information.

S1008: The SMF sends, to a UDM, a request for obtaining the session subscription information of the 5G-RG.

It may be understood that the session subscription information of the 5G-RG may be stored in the UDM, or the UDM may obtain the session subscription information of the 5G-RG from a UDR.

S1009: The UDM sends the session subscription information of the 5G-RG to the SMF.

S1010: The SMF obtains a DNN of a TNGF associated with the PLMN information and a PLMN list corresponding to the DNN.

In this embodiment, the session subscription information of the 5G-RG may include a DNN of a TNGF that is separately associated with at least one operator supported by the 5G-RG. After the SMF receives the session subscription information of the 5G-RG from the UDM, the SMF may obtain, from the session subscription information of the 5G-RG based on indication information of the 5G-RG, the DNN of the TNGF that is separately associated with the at least one operator supported by the 5 G-RG. For example, the DNN of the TNGF that is separately associated with the at least one operator supported by the 5G-RG is expressed as:
TNGF DNN A.r_operator.t_operator and TNGF DNN B.w operator.

Further, the SMF determines, from the DNN of the TNGF that is separately associated with the at least one operator supported by the 5 G-RG based on the identity information of the operator requested by the terminal, namely, r_operator, a DNN A associated with r_operator. Because the DNN A is not only associated with r_operator, but also associated with t_operator, a PLMN list including r operator and t_operator may be used as a PLMN list corresponding to the DNN A. In some scenarios, the SMF may alternatively generate, based on the indication information of the 5G-RG, the PLMN list corresponding to the DNN A.

S1011: The SMF sends a PDU session establishment response to the 5G-RG by using the AMF.

Specifically, the PDU session establishment response may include an IP address required for establishing a session by the 5G-RG and the PLMN list corresponding to the DNN A. Optionally, the PDU session establishment response may further include a wifi_community_enabled indication. Optionally, the PDU session establishment response may further include the DNN A.

It may be understood that, in some scenarios, the DNN A may be associated only with r operator. In this case, the SMF may not generate the PLMN list corresponding to the DNN A. Correspondingly, the PDU session establishment response does not include the PLMN list corresponding to the DNN A.

S1012: The 5G-RG establishes a PDU session with a TNGF.

For example, after receiving the PDU session establishment response, the 5G-RG establishes, based on the IP address required for establishing the session by the 5G-RG and the DNN A, the PDU session between the 5G-RG and the TNGF corresponding to the DNN A.

If the DNN A has a corresponding PLMN list, the PDU session between the 5G-RG and the TNGF corresponding to the DNN A may provide, for a terminal that requests to access a plurality of operators in the PLMN list, a service of accessing a corresponding operator core network.

If the DNN A has no corresponding PLMN list, the PDU session between the 5G-RG and the TNGF corresponding to the DNN A may provide, only for a terminal that requests to access the first operator, a service of accessing a first operator core network.

S1013: The 5G-RG establishes a correspondence between a session and a PLMN list.

If the 5G-RG receives the PLMN list corresponding to the DNN A, a correspondence similar to that in Table 5 or Table 6 is established. If the 5G-RG does not receive the PLMN list corresponding to the DNN A, a correspondence similar to that in Table 3 or Table 4 is established. For a process in which the 5G-RG establishes the correspondence between a session and a PLMN list, refer to the process described in the foregoing embodiment, and details are not described herein again.

S1014: The 5G-RG updates a broadcast list.

If the 5G-RG receives the PLMN list, the 5G-RG broadcasts the PLMN list together with the wildcard PLMN list. If the 5G-RG does not receive the PLMN list, the 5G-RG broadcasts r_operator together with the wildcard PLMN list.

It may be understood that if the 5G-RG actually supports a small quantity of operators, the 5G-RG may not support the operator requested by the terminal. That is, in S110, the SMF may not obtain a DNN of a TNGF that is associated with the operator requested by the terminal. In this case, the SMF may send a rejection request to the 5G-RG, and the 5G-RG may store r operator in a PLMN list not supported by the 5G-RG. In other words, a PLMN list supported by the 5G-RG and the PLMN list not supported by the 5G-RG belong to two different lists. Alternatively, the PLMN list supported by the 5G-RG and the PLMN list not supported by the 5G-RG may belong to a same list. For example, identity information of an operator not supported by the 5G-RG may be added to the correspondence shown in Table 3, Table 4, Table 5, or Table 6, and the identity information of the operator not supported by the 5G-RG does not have a corresponding PDU session identification or an IP address of a TNGF. That is, when the PLMN list supported by the 5G-RG and the PLMN list not supported by the 5G-RG belong to the same list, whether an operator is an operator supported by the 5G-RG may be determined depending on whether identity information of the operator has a corresponding PDU session identification or an IP address of a TNGF. For example, if the identity information of the operator does not have the corresponding PDU session identification or the IP address of the TNGF, it indicates that the operator is the operator not supported by the 5G-RG. If the identity information of the operator has the corresponding PDU session identification or the IP address of the TNGF, it indicates that the operator is the operator supported by the 5G-RG.

It may be understood that in FIG. 7A and FIG. 7B to FIG. 10A and FIG. 10B, the TNGF communicates with another network element by using a PSA. Similarly, the another network element communicates with the TNGF by using the PSA.

In this embodiment, the 5G-RG sends, to the SMF, the identity information of the operator requested by the terminal. The SMF obtains, from the session subscription information of the 5G-RG, the DNN of the TNGF that is associated with the operator requested by the terminal, and determines, based on the DNN, the PLMN list corresponding to the DNN from the DNN of the TNGF that is separately associated with the at least one operator supported by the 5G-RG. Further, the SMF sends the DNN and the PLMN list corresponding to the DNN to the 5G-RG, to implement still another manner of obtaining the PLMN list and further improve flexibility in obtaining the PLMN list by the 5G-RG.

It may be understood that some or all of the steps or operations in the foregoing embodiments are merely examples. Other operations or variations of various operations may be further performed in this embodiment of this application. In addition, the steps may be performed in sequences different from the sequences presented in the foregoing embodiments, and not all operations in the foregoing embodiments are necessarily to be performed.

It may be understood that in the foregoing embodiments, operations or steps implemented by the terminal may be implemented by a component (for example, a chip or a circuit) that may be used in the terminal; operations or steps implemented by the 5G-RG may be implemented by a component (for example, a chip or a circuit) that may be used in the 5G-RG; operations or steps implemented by the AMF may be implemented by a component (for example, a chip or a circuit) that may be used in the AMF; and operations or steps implemented by the SMF may be implemented by a component (for example, a chip or a circuit) that may be used in the SMF.

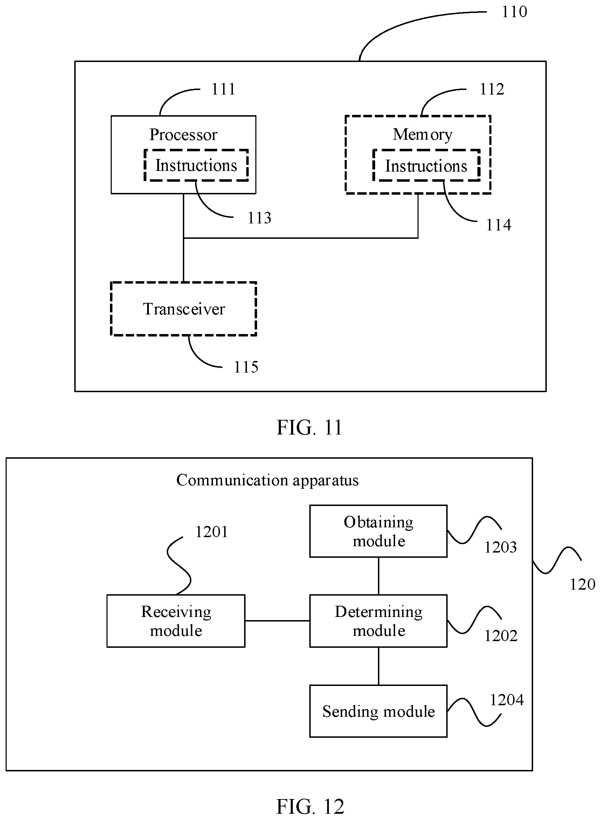

FIG. 11 is a schematic diagram of a structure of a communication apparatus. The communication apparatus may be configured to implement a method in a part corresponding to a terminal, a method in a part corresponding to a 5G-RG, a method in a part corresponding to an AMF, or a method in a part corresponding to an SMF described in the foregoing method embodiments. For details, refer to the descriptions in the foregoing method embodiments.

The communication apparatus 110 may include one or more processors 111. The processor 111 may also be referred to as a processing unit, and may implement a specific control function. The processor 111 may be a general-purpose processor, a dedicated processor, or the like.

In an optional design, the processor 111 may also store instructions 113, and the instructions may be run by the processor, so that the communication apparatus 110 performs the method corresponding to the terminal, a network device, or a core network node described in the foregoing method embodiment.

In another possible design, the communication apparatus 110 may include a circuit. The circuit may implement a sending, receiving, or communication function in the foregoing method embodiments.

Optionally, the communication apparatus 110 may include one or more memories 112. The memory stores instructions 114 or intermediate data. The instructions 114 may be run on the processor, so that the communication apparatus 110 performs the method in the foregoing method embodiments. Optionally, the memory may further store other related data. Optionally, the processor may also store instructions and/or data. The processor and the memory may be separately disposed, or may be integrated together.

Optionally, the communication apparatus 110 may further include a transceiver 115.

The processor 111 may be referred to as the processing unit. The transceiver 115 may be referred to as a transceiver unit, a transceiver, a transceiver circuit, or the like, and is configured to implement a transceiver function of the communication apparatus.

If the communication apparatus is configured to implement an operation corresponding to the terminal in the embodiment shown in FIG. 7A and FIG. 7B, for example, the transceiver may receive a PLMN list sent by the 5G-RG. The transceiver may further complete another corresponding communication function. The processor is configured to complete a corresponding determining or control operation, and optionally, may further store corresponding instructions in the memory. For specific processing manners of components, refer to related descriptions in the foregoing embodiments.

If the communication apparatus is configured to implement an operation corresponding to the 5G-RG in FIG. 7A and FIG. 7B, for example, the transceiver may send the PLMN list to the terminal. The transceiver may further complete another corresponding communication function. The processor is configured to complete a corresponding determining or control operation, and optionally, may further store corresponding instructions in the memory. For specific processing manners of components, refer to related descriptions in the foregoing embodiments.

If the communication apparatus is configured to implement an operation corresponding to the AMF in the embodiment shown in FIG. 7A and FIG. 7B, the transceiver is configured to send, to a UDM, a request for obtaining access subscription information. Optionally, the transceiver may be further configured to complete another related communication operation, and the processor may be further configured to complete another corresponding determining or control operation, for example, determine information about at least one cell. Optionally, the memory may further store corresponding instructions. For specific processing manners of components, refer to related descriptions in the foregoing embodiments.

If the communication apparatus is configured to implement an operation corresponding to the SMF in the embodiment shown in FIG. 7A and FIG. 7B, the transceiver is configured to receive a PDU session establishment request sent by the 5G-RG. Optionally, the transceiver may be further configured to complete another related communication operation, and the processor may be further configured to complete another corresponding determining or control operation. Optionally, the memory may further store corresponding instructions. For specific processing manners of components, refer to related descriptions in the foregoing embodiments.

The processor and the transceiver in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may also be manufactured by using various 1C process technologies, for example, a complementary metal-oxide-semiconductor (complementary metal-oxide-semiconductor, CMOS), ann-channel metal oxide semiconductor (nMetal-oxide-semiconductor, NMOS), a p-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Optionally, the communication apparatus may be an independent device or may be a part of a large device. For example, the device may be:
(1) an independent integrated circuit IC, a chip, or a chip system or subsystem;
(2) a set having one or more ICs, where optionally, the IC set may also include a storage component configured to store data and/or instructions;
(3) an ASIC, for example, a modem (MSM);
(4) a module that can be embedded in another device;
(5) a receiver, a terminal, a cellular phone, a wireless device, a handheld device, a mobile unit, a network device, or the like; or
(6) another device, or the like.

FIG. 12 is a schematic diagram of a structure of a communication apparatus according to an embodiment of this application. As shown in FIG. 12, the communication apparatus 120 includes a receiving module 1201 and a determining module 1202. The receiving module 1201 is configured to receive identity information of an operator requested by a terminal. The determining module 1202 is configured to determine, based on the identity information of the operator requested by the terminal, a session between a first network element and a second network element, where the second network element is an access network element that is associated with the operator requested by the terminal, and the session is used by the terminal to communicate, by using the first network element, with a core network that is deployed by the operator requested by the terminal.

In a possible manner, when determining the session between the first network element and the second network element based on the identity information of the operator requested by the terminal, the determining module 1202 is specifically configured to determine the session between the first network element and the second network element based on the identity information of the operator requested by the terminal and a correspondence between a session and identity information of an operator.

In another possible manner, when determining the session between the first network element and the second network element based on the identity information of the operator requested by the terminal, the determining module 1202 is specifically configured to establish the session between the first network element and the second network element based on the identity information of the operator requested by the terminal.

Optionally, when determining the session between the first network element and the second network element based on the identity information of the operator requested by the terminal, the determining module 1202 is specifically configured to: determine identity information of the second network element based on the identity information of the operator requested by the terminal and identity information of an access network element that is separately associated with at least one operator supported by the first network element, and establish the session between the first network element and the second network element based on the identity information of the second network.

Optionally, the communication apparatus 120 further includes an obtaining module 1203. The obtaining module 1203 is configured to: before the determining module 1202 determines the identity information of the second network element based on the identity information of the operator requested by the terminal and the identity information of the access network element that is separately associated with the at least one operator supported by the first network element, obtain the identity information of the access network element that is separately associated with the at least one operator supported by the first network element.

Optionally, when obtaining the identity information of the access network element that is separately associated with the at least one operator supported by the first network element, the obtaining module 1203 is specifically configured to: obtain a URSP rule of the first network element by using a third network element, and obtain, from the URSP rule, the identity information of the access network element that is separately associated with the at least one operator supported by the first network element.

Optionally, when obtaining the identity information of the access network element that is separately associated with the at least one operator supported by the first network element, the obtaining module 1203 is specifically configured to: receive, from a fourth network element by using the receiving module 1201, the identity information of the access network element that is separately associated with the at least one operator supported by the first network element, where the identity information of the access network element that is separately associated with the at least one operator is obtained by the fourth network element from access subscription information of the first network element.

Optionally, the identity information of the access network element includes a data network name of the access network element.

Optionally, when establishing the session between the first network element and the second network element based on the identity information of the second network, the determining module 1202 is specifically configured to: obtain, from a fifth network element based on the identity information of the second network element, an IP address required by the first network element to establish the session, and establish the session between the first network element and the second network element based on the IP address.

Optionally, the communication apparatus 120 further includes a sending module 1204. When obtaining, from the fifth network element based on the identity information of the second network element, the IP address required by the first network element to establish the session, the determining module 1202 is specifically configured to: send a session establishment request to the fifth network element by using the sending module 1204, where the session establishment request includes the identity information of the second network element and a session type, and receive a session establishment response from the fifth network element by using the receiving module 1201, where the session establishment response includes the IP address required by the first network element to establish the session.

Optionally, the obtaining module 1203 is further configured to obtain identity information of the at least one operator supported by the first network element. The sending module 1204 is further configured to broadcast the identity information of the at least one operator supported by the first network element.

Optionally, the identity information of the at least one operator supported by the first network element includes the identity information of the operator requested by the terminal.

Optionally, when obtaining the identity information of the at least one operator supported by the first network element, the obtaining module 1203 is specifically configured to: receive, from the fourth network element by using the receiving module 1201, the identity information of the at least one operator supported by the first network element, where the identity information of the at least one operator supported by the first network element is obtained by the fourth network element from the access subscription information of the first network element.

Optionally, when obtaining the identity information of the at least one operator supported by the first network element, the obtaining module 1203 is specifically configured to: receive, from the fourth network element by using the receiving module 1201, the identity information of the access network element that is separately associated with the at least one operator supported by the first network element, and determine, based on the identity information of the access network element that is separately associated with the at least one operator, the identity information of the at least one operator supported by the first network element.

Optionally, when obtaining the identity information of the at least one operator supported by the first network element, the obtaining module 1203 is specifically configured to: send indication information to the fourth network element by using the sending module 1204, receive, from the fourth network element by using the receiving module 1201, the identity information of the at least one operator supported by the first network element, where the identity information of the at least one operator supported by the first network element is obtained, from the identity information of the access network element that is separately associated with the at least one operator supported by the first network element, by the fourth network element based on the indication information after the fourth network element obtains, from the access subscription information of the first network element based on the indication information, the identity information of the access network element that is separately associated with the at least one operator supported by the first network element.

Optionally, when establishing the session between the first network element and the second network element based on the identity information of the operator requested by the terminal, the determining module 1202 is specifically configured to: send the session establishment request to the fifth network element by using the sending module 1204, where the session establishment request includes a wildcard data network name, indication information, and the identity information of the operator requested by the terminal, receive the session establishment response from the fifth network element by using the receiving module 1201, where the session establishment response includes the IP address required by the first network element to establish the session, and establish the session between the first network element and the second network element based on the IP address.

Optionally, the identity information of the access network element that is separately associated with the at least one operator supported by the first network element is stored in the first network element.

Optionally, the session establishment response further includes identity information of a plurality of operators corresponding to the second network element.

Optionally, the identity information of the plurality of operators corresponding to the second network element is obtained by the fifth network element from the session subscription information of the first network element based on the indication information.

Optionally, before the receiving module 1201 receives the identity information of the operator requested by the terminal, the sending module 1204 is further configured to broadcast wildcard public land mobile network PLMN information.

Optionally, after establishing, based on the identity information of the operator requested by the terminal, the session between the first network element and the second network element, the determining module 1202 is further configured to establish a correspondence between a session and identity information of at least one operator, where the at least one operator is associated with the second network element.

Optionally, if the session between the first network element and the second network element corresponds to a plurality of operators, the session is used to provide a communication service for a terminal that requests to access the plurality of operators.

Optionally, if the session between the first network element and the second network element corresponds to one operator, the session is used to provide a communication service for a terminal that requests to access the operator.

The communication apparatus in the embodiment shown in FIG. 12 may be configured to perform the technical solution in the foregoing method embodiment. For an implementation principle and a technical effect of the communication apparatus, further refer to related descriptions in the method embodiment. Optionally, the communication apparatus may be a 5G-RG, or may be a component (for example, a chip or a circuit) of the 5G-RG.

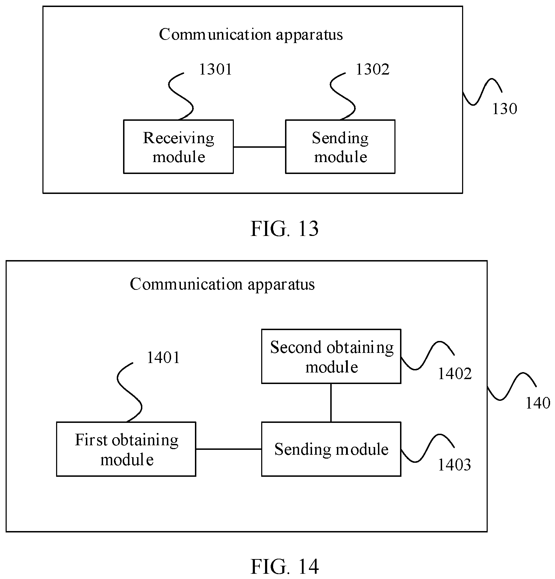

FIG. 13 is a schematic diagram of a structure of another communication apparatus according to an embodiment of this application. As shown in FIG. 13, the communication apparatus 130 includes a receiving module 1301 and a sending module 1302. The receiving module 1301 is configured to receive identity information of at least one operator supported by a first network element. The sending module 1302 is configured to send, to the first network element, identity information of an operator requested by a terminal, where the identity information of the operator requested by the terminal is used to determine a session between the first network element and a second network element, the second network element is an access network element that is associated with the operator requested by the terminal, and the session is used by the terminal to communicate, by using the first network element, with a core network that is deployed by the operator requested by the terminal.

In FIG. 13, further, the identity information of the at least one operator supported by the first network element includes the identity information of the operator requested by the terminal.

In a possible manner, if the session between the first network element and the second network element corresponds to a plurality of operators, the session is used to provide a communication service for a terminal that requests to access the plurality of operators.

In another possible manner, if the session between the first network element and the second network element corresponds to one operator, the session is used to provide a communication service for a terminal that requests to access the operator.

The communication apparatus in the embodiment shown in FIG. 13 may be configured to perform the technical solution in the foregoing method embodiment. For an implementation principle and a technical effect of the communication apparatus, further refer to related descriptions in the method embodiment. Optionally, the communication apparatus may be the terminal, or may be a component (for example, a chip or a circuit) of the terminal.

FIG. 14 is a schematic diagram of a structure of another communication apparatus according to an embodiment of this application. As shown in FIG. 14, the communication apparatus 140 includes a first obtaining module 1401, a second obtaining module 1402, and a sending module 1403. The first obtaining module 1401 is configured to obtain access subscription information of a first network element. The second obtaining module 1402 is configured to obtain, from the access subscription information of the first network element, identity information of an access network element that is separately associated with at least one operator supported by the first network element. The sending module 1403 is configured to send, to the first network element, the identity information of the access network element that is separately associated with the at least one operator supported by the first network element.

In FIG. 14, further, when obtaining, from the access subscription information of the first network element, the identity information of the access network element that is separately associated with the at least one operator supported by the first network element, the second obtaining module 1402 is specifically configured to obtain, from the access subscription information of the first network element based on indication information of the first network element, the identity information of the access network element that is separately associated with the at least one operator supported by the first network element.

Optionally, the identity information of the access network element that is separately associated with the at least one operator supported by the first network element is used to determine identity information of the at least one operator supported by the first network element.

The communication apparatus in the embodiment shown in FIG. 14 may be configured to perform the technical solution in the foregoing method embodiment. For an implementation principle and a technical effect of the communication apparatus, further refer to related descriptions in the method embodiment, and details are not described herein again. Optionally, the communication apparatus may be an AMF, or may be a component (for example, a chip or a circuit) of the AMF

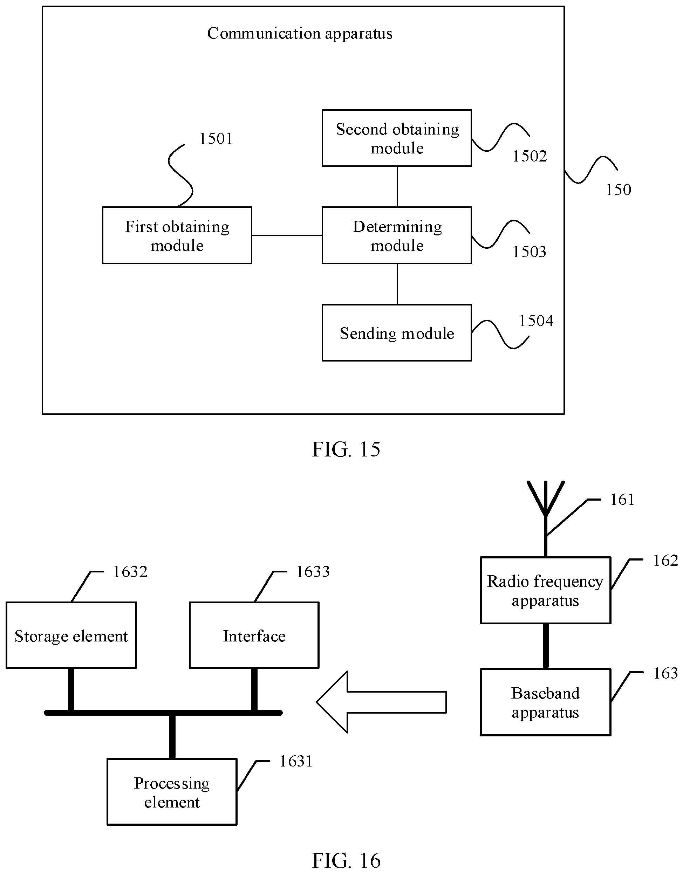

FIG. 15 is a schematic diagram of a structure of another communication apparatus according to an embodiment of this application. As shown in FIG. 15, the communication apparatus 150 includes a first obtaining module 1501, a second obtaining module 1502, a determining module 1503, and a sending module 1504. The first obtaining module 1501 is configured to obtain access subscription information of a first network element. The second obtaining module 1502 is configured to obtain, from the access subscription information of the first network element, identity information of an access network element that is separately associated with at least one operator supported by the first network element. The determining module 1503 is configured to determine, based on the identity information of the access network elements that is separately associated with the at least one operator supported by the first network element, identity information of the at least one operator supported by the first network element. The sending module 1504 is configured to send, to the first network element, the identity information of the at least one operator supported by the first network element.

In FIG. 15, further, when obtaining, from the access subscription information of the first network element, the identity information of the access network element that is separately associated with the at least one operator supported by the first network element, the second obtaining module 1502 is specifically configured to obtain, from the access subscription information of the first network element based on indication information of the first network element, the identity information of the access network element that is separately associated with the at least one operator supported by the first network element.

Optionally, when determining, based on the identity information of the access network element that is separately associated with the at least one operator supported by the first network element, the identity information of the at least one operator supported by the first network element, the determining module 1503 is specifically configured to: determine, based on the indication information of the first network element, the identity information of the at least one operator supported by the first network element from the identity information of the access network element that is separately associated with the at least one operator supported by the first network element.

The communication apparatus in the embodiment shown in FIG. 15 may be configured to perform the technical solution in the foregoing method embodiment. An implementation principle and a technical effect of the communication apparatus is similar, and details are not described herein again. The communication apparatus may be an AMF, or may be a component (for example, a chip or a circuit) of the AMF

It should be understood that division into the foregoing modules of the communication apparatus shown in FIG. 12 to FIG. 15 is merely logical function division. In actual implementation, all or some of the modules may be integrated into one physical entity, or may be physically separated. In addition, all of the modules may be implemented in a form of software invoked by a processing element or in a form of hardware. Alternatively, some of the modules may be implemented in a form of software invoked by a processing element, and some of the modules may be implemented in a form of hardware. For example, the determining module may be an independently disposed processing element, or may be integrated into the communication apparatus, for example, a chip of the 5G-RG, for implementation. In addition, the determining module may be stored in a memory of the communication apparatus in a form of a program and invoked by a processing element of the communication apparatus to perform a function of each of the foregoing modules. An implementation of another module is similar to the implementation of the determining module. In addition, all or some of these modules may be integrated together, or may be implemented independently. The processing element herein may be an integrated circuit and has a signal processing capability. In an implementation process, steps in the foregoing method or the foregoing modules may be implemented by using a hardware integrated logic circuit in the processor element or by using instructions in a form of software.

For example, the foregoing modules may be configured as one or more integrated circuits for implementing the foregoing method, for example, one or more application-specific integrated circuits (Application-Specific Integrated Circuit, ASIC), one or more microprocessors (digital signal processor, DSP), or one or more field programmable gate arrays (Field Programmable Gate Arrays, FPGAs). For another example, when one of the foregoing modules is implemented in a form of a processing element scheduling a program, the processing element may be a general-purpose processor, for example, a central processing unit (Central Processing Unit, CPU) or another processor that may invoke the program For still another example, these modules may be integrated together and implemented in a form of a system-on-a-chip (system-on-a-chip, SOC).

FIG. 16 is a schematic diagram of a structure of still another communication apparatus according to an embodiment of this application. The communication apparatus may be specifically a 5G-RG or an AMF. As shown in FIG. 16, the communication apparatus includes an antenna 161, a radio frequency apparatus 162, and a baseband apparatus 163. The antenna 161 is connected to the radio frequency apparatus 162. In an uplink direction, the radio frequency apparatus 162 receives, by using the antenna 161, information sent by a terminal, and sends, to the baseband apparatus 163 for processing, the information sent by the terminal. In a downlink direction, the baseband apparatus 163 processes information about the terminal, and sends the information to the radio frequency apparatus 162. The radio frequency apparatus 162 processes the information about the terminal, and then sends the processed information to the terminal by using the antenna 161.

The foregoing communication apparatus may be located at the baseband apparatus 163. In an implementation, the foregoing modules are implemented by a processing element scheduling a program. For example, the baseband apparatus 163 includes a processing element and a storage element, and the processing element 1631 invokes a program stored in the storage element 1632, to perform the method in the foregoing method embodiment. In addition, the baseband apparatus 163 may further include an interface 1633, configured to exchange information with the radio frequency apparatus 162. The interface is, for example, a common public radio interface (common public radio interface, CPRI).

In another implementation, the foregoing modules may be configured as one or more processing elements to implement the foregoing method, and the processing elements are arranged on the baseband apparatus 163. The processing element herein may be an integrated circuit, for example, one or more ASICs, one or more DSPs, or one or more FPGAs. These integrated circuits may be integrated together to form a chip.

For example, the foregoing modules may be integrated in a form of a system-on-a-chip (system-on-a-chip, SOC). For example, the baseband apparatus 163 includes an SOC chip, configured to implement the foregoing method. The processing element 1631 and the storage element 1632 may be integrated into the chip, and the processing element 1631 invokes the program stored in the storage element 1632, to implement the foregoing method or functions of the foregoing modules. Alternatively, at least one integrated circuit may be integrated in the chip to implement the foregoing method or functions of the foregoing modules. Alternatively, the foregoing implementations may be combined, so that functions of some modules are implemented by the processing element invoking a program, and functions of some modules are implemented by using an integrated circuit.

Regardless of a manner, the communication apparatus includes at least one processing element, a storage element, and a communication interface, and the at least one processing element is configured to perform the method provided in the foregoing method embodiment. The processing element may perform some or all of the steps in the foregoing method embodiment in a first manner of executing the program stored in the storage element, or in a second manner, to be specific, a manner of using a hardware integrated logic circuit in the processing element in combination with instructions. Certainly, the method provided in the foregoing method embodiment may alternatively be performed by combining the first manner with the second manner.

The processing element herein is the same as that described above, and may be a general-purpose processor, for example, a central processing unit (Central Processing Unit, CPU); or may be further configured as one or more integrated circuits for implementing the foregoing method, for example, one or more application-specific integrated circuits (Application-Specific Integrated Circuit, ASIC), one or more microprocessors (digital signal processor, DSP), or one or more field programmable gate arrays (Field Programmable Gate Arrays, FPGAs). The storage element may be one memory, or may be a general term of a plurality of storage elements.

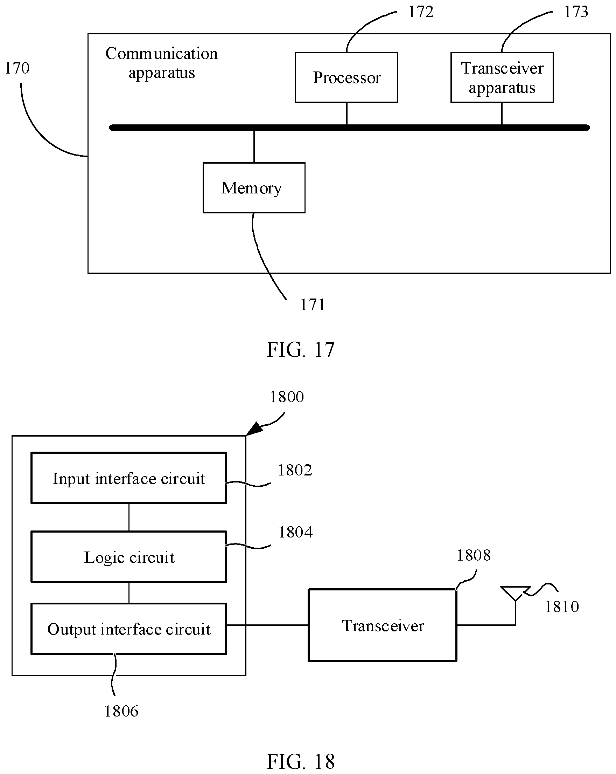

FIG. 17 is a schematic diagram of a structure of still another communication apparatus according to an embodiment of this application. As shown in FIG. 17, the communication apparatus 170 includes a processor 172 and a transceiver apparatus 173. The transceiver apparatus 173 may alternatively be a transceiver. The transceiver apparatus 173 receives a PLMN list from a 5G-RG. Further, the communication apparatus further includes a memory 171, configured to store a computer program or instructions, and the processor 172 is configured to invoke the program or the instructions.

The communication apparatus in the embodiment shown in FIG. 17 may be configured to perform the technical solution in the foregoing method embodiment. For an implementation principle and a technical effect of the communication apparatus, further refer to related descriptions in the method embodiment, and details are not described herein again. The communication apparatus may be a terminal, or may be a component (for example, a chip or a circuit) of the terminal.

In FIG. 17, the transceiver apparatus 173 may be connected to an antenna. In a downlink direction, the transceiver apparatus 173 receives, by using the antenna, information sent by a network device, and sends the information to the processor 172 for processing. In an uplink direction, the processor 172 processes data of the terminal, and sends the data to the network device, for example, the 5G-RG, by using the transceiver apparatus 173.

Optionally, the transceiver apparatus may be configured to implement corresponding functions of the receiving module 1301 and the sending module 1302 of the communication apparatus shown in FIG. 13. Alternatively, some or all of the foregoing modules may be implemented in a form of an integrated circuit that is embedded in a chip of the terminal. In addition, the modules may be separately implemented, or may be integrated together. To be specific, the foregoing modules may be configured as one or more integrated circuits for implementing the foregoing method, for example, one or more application-specific integrated circuits (Application-Specific Integrated Circuit, ASIC), one or more microprocessors (digital signal processor, DSP), or one or more field programmable gate arrays (Field Programmable Gate Arrays, FPGAs).

An embodiment of this application further provides a computer-readable storage medium The computer-readable storage medium stores a computer program. When the computer program is run on a computer, the computer is enabled to perform the communication method according to the foregoing embodiments.

In addition, an embodiment of this application further provides a computer program product. The computer program product includes a computer program. When the computer program is run on a computer, the computer is enabled to perform the communication method according to the foregoing embodiments.

In addition, an embodiment of this application further provides a processor. The processor includes at least one circuit, configured to perform the communication method in the foregoing embodiments.

In addition, an embodiment of this application further provides a system. The system includes the terminal, the 5G-RG, the AMF, the SMF, the TNGF, or another network element described above.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk), or the like.

Based on a same inventive concept as the method provided in the foregoing embodiment of this application, an embodiment of this application further provides a communication apparatus. The communication apparatus may be the terminal, the 5G-RG, the AMF, the SMF, or the TNGF described above. The communication apparatus is configured to implement the methods in the foregoing embodiments. Some or all of the methods in the foregoing embodiments may be implemented by hardware or software. When the methods are implemented by hardware, refer to FIG. 18. The communication apparatus 1800 includes an input interface circuit 1802, a logic circuit 1804, and an output interface circuit 1806. In addition, the communication apparatus 1800 further includes a transceiver 1808 and an antenna 1810. The transceiver 1808 receives and sends data by using the antenna 1810.

The logic circuit 1804 is configured to perform the communication method shown in FIG. 7A and FIG. 7B. For details, refer to the descriptions in the foregoing method embodiment. The details are not described herein again. In a specific implementation, the communication apparatus 1800 may be a chip or an integrated circuit.

## Claims

1. A communication method, comprising:
receiving, by a first network element, identity information of an operator requested by a terminal; and
determining, by the first network element based on the identity information of the operator requested by the terminal, a session between the first network element and a second network element, wherein the second network element is an access network element that is associated with the operator requested by the terminal, wherein
the session is for communicating, by the terminal through the first network element, with a core network that is deployed by the operator requested by the terminal.

2. The method according to claim 1, wherein the determining, by the first network element based on the identity information of the operator requested by the terminal, a session between the first network element and a second network element comprises:
determining, by the first network element, the session between the first network element and the second network element based on the identity information of the operator requested by the terminal and a correspondence between a session and identity information of an operator.

3. The method according to claim 1, wherein the determining, by the first network element based on the identity information of the operator requested by the terminal, a session between the first network element and a second network element comprises:
establishing, by the first network element, the session between the first network element and the second network element based on the identity information of the operator requested by the terminal.

4. The method according to claim 3, wherein the establishing, by the first network element, the session between the first network element and the second network element based on the identity information of the operator requested by the terminal comprises:
determining, by the first network element, identity information of the second network element based on the identity information of the operator requested by the terminal and identity information of an access network element that is separately associated with at least one operator supported by the first network element; and
establishing, by the first network element, the session between the first network element and the second network element based on the identity information of the second network element.

5. The method according to claim 4, wherein before the determining, by the first network element, identity information of the second network element based on the identity information of the operator requested by the terminal and identity information of the access network element that is separately associated with at least one operator supported by the first network element, the method further comprises:
obtaining, by the first network element, the identity information of the access network element that is separately associated with the at least one operator supported by the first network element.

6. The method according to claim 5, wherein the obtaining, by the first network element, the identity information of the access network element that is separately associated with at least one operator supported by the first network element comprises:
obtaining, by the first network element, a URSP rule of the first network element through a third network element; and
obtaining, by the first network element from the URSP rule, the identity information of the access network element that is separately associated with the at least one operator supported by the first network element.

7. The method according to claim 5, wherein the obtaining, by the first network element, the identity information of the access network element that is separately associated with the at least one operator supported by the first network element comprises:
receiving, by the first network element from a fourth network element, the identity information of the access network element that is separately associated with the at least one operator supported by the first network element, wherein the identity information of the access network element that is separately associated with the at least one operator is obtained by the fourth network element from access subscription information of the first network element.

8. The method according to any one of claims 4 to 7, wherein the establishing, by the first network element, the session between the first network element and the second network element based on the identity information of the second network element comprises:
obtaining, by the first network element from a fifth network element based on the identity information of the second network element, an IP address required by the first network element to establish the session; and
establishing, by the first network element, the session between the first network element and the second network element based on the IP address.

9. The method according to claim 8, wherein the obtaining, by the first network element from a fifth network element based on the identity information of the second network element, an IP address required by the first network element to establish the session comprises:
sending, by the first network element, a session establishment request to the fifth network element, wherein the session establishment request comprises the identity information of the second network element and a session type; and
receiving, by the first network element, a session establishment response from the fifth network element, wherein the session establishment response comprises the IP address required by the first network element to establish the session.

10. The method according to any one of claims 1 to 9, wherein the method further comprises:
obtaining, by the first network element, identity information of the at least one operator supported by the first network element; and
broadcasting, by the first network element, the identity information of the at least one operator supported by the first network element.

11. The method according to claim 10, wherein the identity information of the at least one operator supported by the first network element comprises the identity information of the operator requested by the terminal.

12. The method according to claim 10 or 11, wherein the obtaining, by the first network element, identity information of the at least one operator supported by the first network element comprises:
receiving, by the first network element from the fourth network element, the identity information of the at least one operator supported by the first network element, wherein the identity information of the at least one operator supported by the first network element is obtained by the fourth network element from the access subscription information of the first network element.

13. The method according to claim 10 or 11, wherein the obtaining, by the first network element, identity information of the at least one operator supported by the first network element comprises:
receiving, by the first network element from the fourth network element, the identity information of the access network element that is separately associated with the at least one operator supported by the first network element; and
determining, by the first network element based on the identity information of the access network element that is separately associated with the at least one operator, the identity information of the at least one operator supported by the first network element.

14. The method according to claim 10 or 11, wherein the obtaining, by the first network element, identity information of the at least one operator supported by the first network element comprises:
sending, by the first network element, indication information to the fourth network element; and
receiving, by the first network element from the fourth network element, the identity information of the at least one operator supported by the first network element, wherein the identity information of the at least one operator supported by the first network element is obtained, from the identity information of the access network element that is separately associated with the at least one operator supported by the first network element, by the fourth network element based on the indication information after the fourth network element obtains, from the access subscription information of the first network element based on the indication information, the identity information of the access network element that is separately associated with the at least one operator supported by the first network element.

15. The method according to claim 3, wherein the establishing, by the first network element, the session between the first network element and the second network element based on the identity information of the operator requested by the terminal comprises:
sending, by the first network element, a session establishment request to a fifth network element, wherein the session establishment request comprises a wildcard data network name, indication information, and the identity information of the operator requested by the terminal;
receiving, by the first network element, a session establishment response from the fifth network element, wherein the session establishment response comprises an IP address required by the first network element to establish the session; and
establishing, by the first network element, the session between the first network element and the second network element based on the IP address.

16. The method according to claim 4, wherein the identity information of the access network element that is separately associated with the at least one operator supported by the first network element is stored in the first network element.

17. A communication method, comprising:
receiving, by a terminal, identity information of at least one operator supported by a first network element; and
sending, by the terminal, identity information of an operator requested by the terminal to the first network element, wherein the identity information of the operator requested by the terminal is used to determine a session between the first network element and a second network element, wherein the second network element is an access network element that is associated with the operator requested by the terminal, wherein
the session is used by the terminal to communicate, through the first network element, with a core network that is deployed by the operator requested by the terminal.

18. The method according to claim 17, wherein the identity information of the at least one operator supported by the first network element comprises the identity information of the operator requested by the terminal.

19. The method according to claim 17 or 18, wherein if the session between the first network element and the second network element corresponds to a plurality of operators, the session is used to provide a communication service for a terminal that requests to access the plurality of operators.

20. The method according to claim 17 or 18, wherein if the session between the first network element and the second network element corresponds to one operator, the session is used to provide a communication service for a terminal that requests to access the operator.

21. A communication apparatus, comprising a unit configured to perform the method according to any one of claims 1 to 16 or claims 17 to 20.

22. A communication apparatus, comprising a processor and a transceiver, wherein the processor and the transceiver communicate with each other through an internal connection, and the processor is configured to perform the processing step in the method according to any one of claims 1 to 16 or claims 17 to 20.

23. A communication apparatus, comprising a memory and a processor, wherein
the memory is configured to store a computer program; and
the processor is configured to execute the computer program stored in the memory, to enable the communication apparatus to perform the method according to any one of claims 1 to 16 or claims 17 and 20.

24. A communication apparatus, comprising an input interface circuit, a logic circuit, and an output interface circuit, wherein the logic circuit is configured to perform the method according to any one of claims 1 to 16 or claims 17 to 20.

25. A computer-readable storage medium, configured to store a computer program, wherein the computer program comprises instructions used to perform the method according to any one of claims 1 to 16 or claims 17 to 20.

26. A computer program, wherein the computer program comprises instructions used to perform the method according to any one of claims 1 to 16 or claims 17 to 20.

27. A processor, wherein the processor comprises at least one circuit, configured to perform the method according to any one of claims 1 to 16 or claims 17 to 20.

28. A communication system, comprising a first network element configured to perform the method according to any one of claims 1 to 16 and a second network element configured to communicate with the first network element.
